# EUROPEAN PATENT APPLICATION

(11) **EP 3 879 036 A1**
(43) Date of publication of application: **15.09.2021**
(21) Application number: 19883195.0
(22) Date of filing: 06.11.2019
(51) Int. Cl.: E02F 9/20, E02F 9/24, E02F 9/26, G08B 21/24, H04N 7/18

(54) **SHOVEL, INFORMATION PROCESSING DEVICE, INFORMATION PROCESSING METHOD, INFORMATION PROCESSING PROGRAM, TERMINAL DEVICE, DISPLAY METHOD, AND DISPLAY PROGRAM**

(30) Priority: 08.11.2018 JP 2018210900
(71) Applicant: Sumitomo Construction Machinery Co., Ltd., Tokyo 141-6025 (JP)
(72) Inventor: YAMAMOTO, Takashi, Chiba-shi, Chiba 263-0001 (JP)
(74) Representative: Louis Pöhlau Lohrentz
(86) International application number: PCT/JP2019/043490
(87) International publication number: WO 2020/095945

(57) **Abstract**

A technology that can prevent an undesirable movement of a shovel can be provided. According to an embodiment of the present disclosure, a shovel 100 detects a predetermined movement (for example, a movement corresponding to an unexpected use) of the shovel 100, and records, in a storage unit 307, unexpected use log information indicating that the predetermined movement is detected, and transmits the unexpected use log information to a management apparatus 200. According to another embodiment of the present disclosure, the management apparatus 200 obtains, from the shovel 100, log information indicating that a predetermined movement of the shovel 100 is detected, and records the log information in a storage unit 2100.

## Description

### TECHNICAL FIELD

The disclosures herein relate to a shovel.

### BACKGROUND ART

A shovel may be equipped with various types of functions to prevent undesirable movements of the shovel (see Patent Document 1, for example).

For example, in Patent Document 1, any undesirable movement of a shovel, such as approaching a monitoring object in the vicinity of the shovel, is prevented by detecting the object, outputting a warning, and restricting the operation of the shovel.

### RELATED-ART DOCUMENTS

### PATENT DOCUMENTS

Patent Document 1: Patent Document 1: Japanese Unexamined Patent Publication No. 2017-101419

### SUMMARY OF THE INVENTION

### PROBLEM TO BE SOLVED BY THE INVENTION

However, if an operator does not perform an appropriate operation, undesirable movements of a shovel may occur even if the shovel is equipped with a function to prevent such undesirable movements. Further, there may be a case where a shovel having an automatic operation function selects undesirable movement for various reasons.

In view of the above-described problem, an object is to provide a technology that can prevent undesirable movements of a shovel.

### MEANS TO SOLVE THE PROBLEM

In order to achieve the object, according to an embodiment of the present disclosure, a shovel obtains information related to a predetermined movement of the shovel, and detects the predetermined movement or transmits the information related to the predetermined movement to an external apparatus.

According to another embodiment of the present disclosure, an information processing apparatus obtains information related to a predetermined movement of a shovel, and detects the predetermined movement of the shovel or obtains log information indicating that the predetermined movement is detected by the shovel. The information related to the predetermined movement of the shovel is obtained by the shovel.

According to a further embodiment of the present disclosure, an information processing method executed by an information processing apparatus is provided. The method includes obtaining information related to a predetermined movement of the shovel, and detecting the predetermined movement of the shovel or obtaining log information indicating that the predetermined movement is detected by the shovel. The information related to the predetermined movement of the shovel is obtained by the shovel.

According to a further embodiment of the present disclosure, there is provided an information processing program for causing an information processing apparatus to execute a process including obtaining information related to a predetermined movement of a shovel, and detecting the predetermined movement of the shovel or obtaining log information indicating that the predetermined movement is detected by the shovel. The information related to the predetermined movement of the shovel is obtained by the shovel.

According to a further embodiment of the present disclosure, a terminal apparatus includes a display unit configured to display, in a predetermined format, information related to log information for each detection of a predetermined movement of a shovel.

According to a further embodiment of the present disclosure, a display method executed by a terminal apparatus is provided. The method includes displaying, on a display unit of the terminal apparatus, information related to log information for each detection of a predetermined movement of a shovel in a predetermined format.

According to a further embodiment of the present disclosure, there is provided a display program for causing a terminal apparatus to execute a process including displaying, on a display unit of the terminal apparatus, information related to log information for each detection of a predetermined movement of a shovel in a predetermined format.

### EFFECTS OF THE INVENTION

According to the above-described embodiments, a technology that can prevent undesirable movements of a shovel can be provided.

### BRIEF DESCRIPTION OF THE DRAWINGS

FIG. 1 is a schematic diagram illustrating an example of a configuration of a shovel state log management system according to an embodiment;
FIG. 2 is a configuration diagram illustrating an example of a configuration of the shovel state log management system SYS according to an embodiment;
FIG. 3A is a diagram illustrating a specific example of an unexpected use of the shovel;
FIG. 3B is a diagram illustrating a specific example of an unexpected use of the shovel;
FIG. 3C is a diagram illustrating a specific example of an unexpected use of the shovel;
FIG. 3D is a diagram illustrating a specific example of an unexpected use of the shovel;
FIG. 4 is a diagram illustrating a specific example of unexpected use log information;
FIG. 5A is a diagram illustrating a first example of unexpected use log-related information (an example of unexpected use log history extraction information) displayed on a display device of a support apparatus;
FIG. 5B is a diagram illustrating a second example of unexpected use log-related information (an example of unexpected use log statistical information) displayed on the display device of the support apparatus;
FIG. 5C is a diagram illustrating a third example of unexpected use log-related information (another example of unexpected use log statistical information) displayed on the display device of the support apparatus;
FIG. 6A is a diagram illustrating an example of an operation screen for obtaining unexpected use log-related information displayed on the display device of the support apparatus; and
FIG. 6B is a diagram illustrating another example of the operation screen for obtaining unexpected use log-related information displayed on the display device of the support apparatus.

### MODE FOR CARRYING OUT THE INVENTION

In the following, embodiments will be described with reference to the drawings.

### [Outline of Shovel State Log Management System]

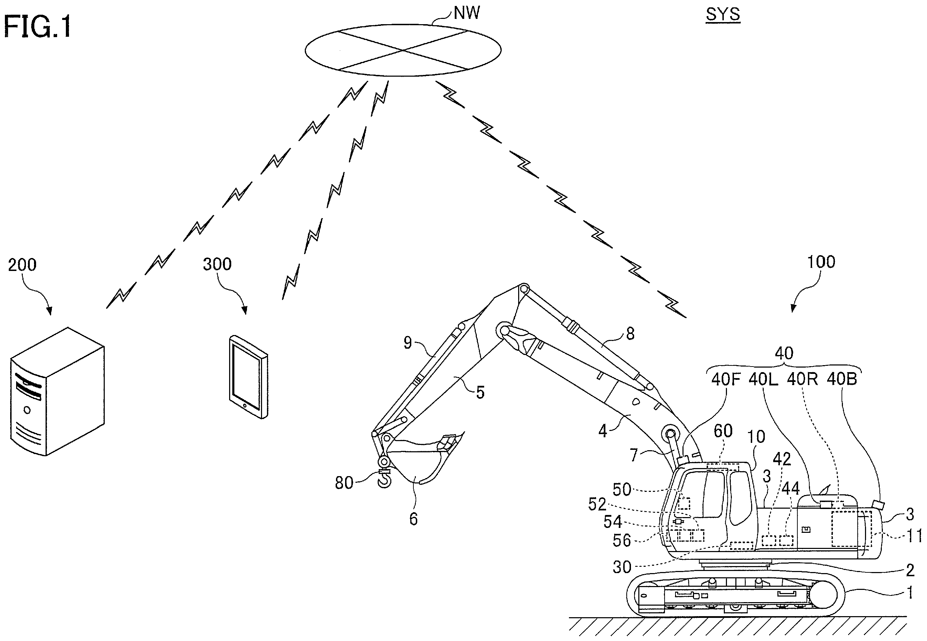

First, an outline of a shovel state log management system SYS will be described with reference to FIG. 1.

FIG. 1 is a schematic diagram illustrating an example of a configuration of a shovel state log management system SYS according to an embodiment.

The shovel state log management system SYS includes a shovel 100, a management apparatus 200, and a support apparatus 300, and obtains and records log information related to various states of the shovel 100. The shovel state log management system SYS generates information (hereinafter referred to as "log-related information") for analyzing various states of the shovel 100 based on log information (hereinafter referred to as "log history information") accumulated through the support apparatus 300, and provides the information to a user. For example, upon detecting a predetermined movement of the shovel 100 in response to an operator's operation or in response to an automatic operation function of the shovel 100, that is, upon detecting a predetermined use, the shovel state log management system SYS records log management indicating that the predetermined use is detected. Specifically, upon detecting an unexpected use, which corresponds to a predetermined use, of the shovel 100 (hereinafter simply referred to as an "unexpected use"), the shovel state log management system SYS records log information indicating the detection of the unexpected use. Further, the shovel state log management system SYS generates log-related information (hereinafter referred to as "unexpected use log-related information") for analyzing an unexpected use of the shovel 100 based on a history of accumulated unexpected use log information (hereinafter referred to as "unexpected use log history information"), and provides the log-related information to a user through the support apparatus 300.

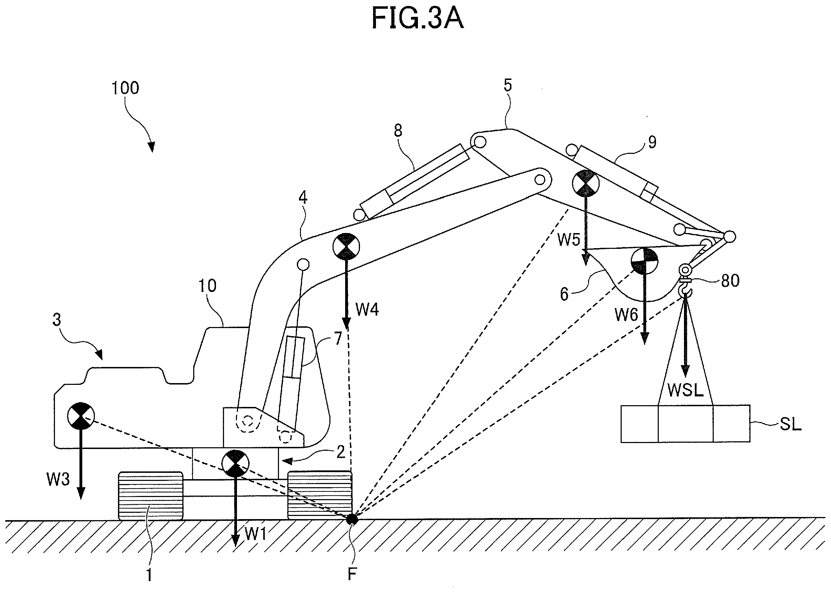

An unexpected use of the shovel 100 is a use state corresponding to an undesired movement of the shovel 100. An unexpected use of the shovel 100 may include a use state of the shovel 100 that is prohibited or not recommended by law or by the manufacturer of the shovel 100 from the viewpoint of safety of workers in the vicinity of the shovel 100 at a work site. Additionally, an unexpected use of the shovel 100 may include a use state of the shovel 100 that is prohibited or not recommended by the manufacturer of the shovel 100 from the viewpoint of the life and durability of the shovel 100. Details of unexpected uses of the shovel 100 will be described later (see FIGS. 3A through 3D, for example).

The shovel state log management system SYS may include one shovel 100 or a plurality of shovels 100. That is, the shovel state log management system SYS is capable of accumulating log information of the plurality of shovels 100. In the following, an example in which the shovel log management system SYS includes the plurality of shovels 100 will be mainly described. Further, the shovel state log management system SYS may include one support apparatus 300 or a plurality of support apparatuses 300. That is, a plurality of users can receive log-related information through the respective support apparatuses 300 owned by the users.

### <Outline of Shovel>

The shovel 100 includes a lower traveling body 1, an upper turning body 3 pivotably (turnably) attached to the lower traveling body 1 through a turning mechanism 2, a boom 4, an arm 5, a bucket 6, and a cabin 10. The boom 4, the arm 5, and the bucket 6 serve as an attachment.

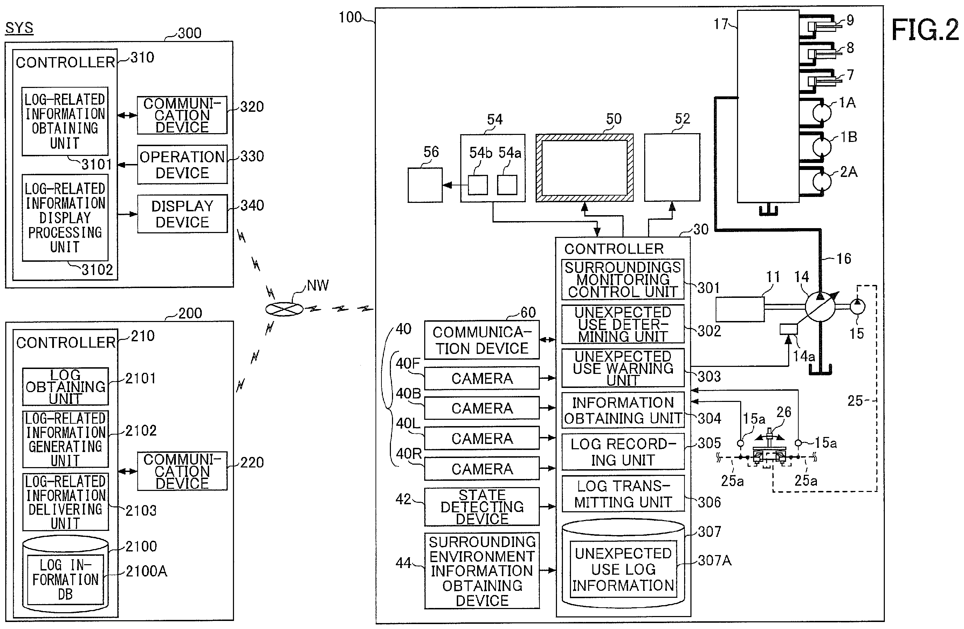

The lower traveling body 1 includes, for example, a pair of left and right crawlers, and the crawlers are hydraulically driven by respective traveling hydraulic motors 1A and 1B (see FIG. 2) to drive the shovel 100.

The upper turning body 3 is driven by a turning hydraulic motor 2A (see FIG. 2) to rotate relative to the lower traveling body 1.

The boom 4 is pivotably attached to the front center of the upper turning body 3 such that the boom 4 can be raised and lowered, the arm 5 is pivotably attached to the distal end of the boom 4 such that the arm 5 can be turned upward and downward, and the bucket 6 is pivotably attached to the end of the arm 5 such that the bucket 6 can be turned upward and downward. The boom 4, the arm 5, and the bucket 6 are hydraulically driven by a boom cylinder 7, an arm cylinder 8, and a bucket cylinder 9, respectively. The boom cylinder 7, the arm cylinder 8, and the bucket cylinder 9 serve as hydraulic actuators.

Further, a hook 80 for crane work is attached to the bucket 6 serving as an end attachment. The proximal end of the hook 80 is pivotably connected to a bucket pin that connects the arm 5 and the bucket 6. This allows the hook 80 to be stored in a space formed between two bucket links when work other than crane work, such as excavation work, is performed.

The bucket 6 is an example of an end attachment. Any type of an end attachment different from the bucket 6 may also be attached (for example, an end attachment different in use from the bucket 6, such as a breaker or a lifting magnet, or an end attachment different in specification other than use from the bucket 6, such as a large bucket, may be attached). That is, the shovel 100 may be configured such that the type of the end attachment can be appropriately changed in accordance with work to be performed.

The cabin 10 is a cab in which an operator is seated, and an operation device 26 (see FIG. 2) is provided in the cabin 10. For example, the cabin 10 is mounted on the front left of the upper turning body 3.

The shovel 100 can communicate with the management apparatus 200 through a predetermined communication network NW. The communication network NW may include, for example, a mobile communication network including a base station as a terminal end. Further, the communication network NW may include a satellite communication network that uses a communications satellite in the air above the shovel 100. Further, the communication network NW may include the Internet. Further, the communication network NW may include a near-field communication network that complies with a protocol such as Wi-Fi or Bluetooth (registered trademark). Accordingly, the shovel 100 can transmit (upload) various types of information to the management apparatus 200. The shovel 100 may be configured to communicate with the support apparatus 300 through the communication network NW. Details will be described later.

The shovel 100 drives driving elements such as the lower traveling body 1, the upper turning body 3, the boom 4, the arm 5, and the bucket 6 by operating actuators in accordance with the operation performed by the operator in the cabin 10.

The shovel 100 may be remotely operated by an operator of a predetermined external apparatus (such as the management apparatus 200 or the support apparatus 300) instead of or in addition to the operator in the cabin 10. In this case, for example, the shovel 100 transmits image information (an image) to the external apparatus. The image information is output from (the image is captured by) an image capturing device 40, which will be described later. Accordingly, the operator of the external apparatus can remotely operate the shovel 100 while checking the image information displayed by a display device of the external apparatus. The shovel 100 may drive driving elements such as the lower traveling body 1, the upper turning body 3, the boom 4, the arm 5, and the bucket 6 by operating hydraulic actuators in accordance with a remote operation signal transmitted from the external apparatus. The remote operation signal represents details of the remote operation. If the shovel 100 is remotely operated, the shovel 100 may be unattended. In the following description, an operation performed by an operator may be an operation performed by an operator in the cabin 10 on the operation device 26, or may be a remote operation performed by an operator of the external apparatus.

Further, the shovel 100 may autonomously operate hydraulic actuators independent of the operator's operation. Accordingly, the shovel 100 can implement a function (hereinafter referred to as an "automatic operation function") to automatically operate at least some driving elements such as the lower traveling body 1, the upper turning body 3, the boom 4, the arm 5, and the bucket 6.

The automatic operation function may include a function (what is known as a "semi-automatic operation function") to automatically operate driving elements (hydraulic actuators) other than a target driving element (hydraulic actuator) in response to the operator's operation on the operation device 26 or the operator's remote operation. Further, the automatic operation function may include a function (what is known as a "fully automatic operation function") to autonomously operate at least some of a plurality of driving elements (hydraulic actuators) without the operator's operation on the operation device 26 or the operator's remote operation. When the fully automatic operation function is enabled, the shovel 100 may be unattended. Further, the automatic operation function may also include a function ("gesture operation function") in which the shovel 100 identifies a gesture of a person such as a worker around the shovel 100, and automatically operates at least some of the plurality of driving elements (hydraulic actuators) in accordance with the identified gesture. In addition, each of the semi-automatic operation function, the fully automatic operation function, and the gesture operation function may include a function in which an automatic operation of a driven element (hydraulic actuator) is automatically determined in accordance with predetermined rules. Further, each of the semi-automatic operation function, the fully automatic operation function, and the gesture operation function may include a function (what is known as an "autonomous operation function") in which the shovel 100 autonomously makes various determinations, and an automatic operation of a driving element (hydraulic actuator) is determined in accordance with the determination results.

### <Outline of Management Apparatus>

The management apparatus 200 (an example of an external apparatus or an information processing apparatus) is located at a position geographically separated from the shovel 100 and a user of the support apparatus 300. The management apparatus 200 is, for example, a server apparatus that is installed in a management center located outside a work site where the shovel 100 performs work and that mainly includes one or more server computers. In this case, the server apparatus may be a company's own server operated by a business operator of the shovel state log management system SYS or by an affiliated business operator related to the business operator. Alternatively, the server apparatus may be a rental server or what is known as a cloud server. Further, the management apparatus 200 may be a server apparatus (what is known as an edge server) installed at a management office within a work site of the shovel 100, or may be a general-purpose stationary or portable computer terminal.

As described above, the management apparatus 200 is capable of communicating with each of the shovel 100 and the support apparatus 300 through the communication network NW. Accordingly, the management apparatus 200 can receive and store (accumulate) various types of information uploaded from the shovel 100. Further, the management apparatus 200 can transmit various types of information including log-related information to the support apparatus 300 in response to a request from the support apparatus 300.

Further, the management apparatus 200 may be configured to be able to remotely operate the shovel 100. Specifically, the management apparatus 200 may cause a display device such as a liquid crystal display or an organic electroluminescent (EL) display to display image information of the image capturing device 40, which is transmitted from the shovel 100, and the remote control operator may remotely operate the shovel 100 while looking at the image information. At this time, the remote control operator can use a remote operation input device (for example, a general-purpose operation device, such as a touch panel, a touchpad, a joystick, or a dedicated operation device that imitates the operation device 26) provided in the management apparatus 200. The management apparatus 200 transmits a remote operation signal including details of the remote operation to the shovel 100 through the communication network NW. Accordingly, the shovel 100 can be operated in accordance with the remote operation signal transmitted from the management apparatus 200, as controlled by a controller 30.

### <Outline of Support Apparatus>

The support apparatus 300 (an example of a user terminal or a terminal apparatus) is a user terminal used by a user who receives log-related information. The user may be a supervisor of a work site, an administrator, an operator of the shovel 100, an administrator of the shovel 100, a service technician of the shovel 100, a developer of the shovel 100, or the like. The support apparatus 300 is a general-purpose portable terminal, such as a laptop computer terminal, a tablet terminal, or a smartphone carried by the user. The support apparatus 300 may also be a general-purpose stationary terminal, such as a desktop computer. The support apparatus 300 may be a dedicated terminal (a portable terminal or a stationary terminal) for receiving log-related information.

The support apparatus 300 is capable of communicating with the management apparatus 200 through the communication network NW. Accordingly, the support apparatus 300 can receive log-related information transmitted from the management apparatus 200, and provide the log-related information to the user through a display device 340, which will be described later, included in the support apparatus 300. Further, the support apparatus 300 may be configured to be able to communicate with the shovel 100 through the communication network NW. Details will be described later.

Further, the support apparatus 300 may be configured to be able to remotely operate the shovel 100. Specifically, the support apparatus 300 may cause the display device 340 to display image information of the image capturing device 40, which is transmitted from the shovel 100 or the management apparatus 200, and the user may remotely operate the shovel 100 while looking at the image information. At this time, the user can use an input device (such as a touch panel, a touchpad, or a joystick) that is included in the support apparatus 300 or communicatively connected to the support apparatus 300. The support apparatus 300 transmits a remote operation signal including details of the remote operation directly to the shovel 100 through the communication network NW or indirectly to the shovel 100 through the management apparatus 200. Accordingly, the shovel 100 can be operated in accordance with the remote operation signal transmitted from the support apparatus 300, as controlled by the controller 30.

### [Configuration of Shovel State Log Management System]

Next, a specific configuration of the shovel state log management system SYS according to an embodiment will be described with reference to FIG. 2 in addition to FIG. 1.

FIG. 2 is a diagram illustrating an example of a configuration of the shovel state log management system SYS according to an embodiment.

In FIG. 2, a mechanical power system is indicated by a double line, a hydraulic oil line (high-pressure hydraulic line) is indicated by a thick continuous line, a pilot line is indicated by a dashed line, and an electric drive control system is indicated by a thin continuous line.

### <Configuration of Shovel>

As described above, a hydraulic drive system of the shovel 100 according to the present embodiment includes an engine 11, the traveling hydraulic motors 1A and 1B, the turning hydraulic motor 2A, the boom cylinder 7, the arm cylinder 8, and the bucket cylinder 9, which hydraulically drive the lower traveling body 1, the upper turning body 3, the boom 4, the arm 5, and the bucket 6, respectively. In the following, some or all of the traveling hydraulic motors 1A and 1B, the turning hydraulic motor 2A, the boom cylinder 7, the arm cylinder 8, and the bucket cylinder 9 may be referred to as "hydraulic actuators" for convenience. Further, the hydraulic drive system of the shovel 100 according to the present embodiment includes an engine 11, a main pump 14, and a control valve 17.

The engine 11 is a drive power source of the shovel 100, and is installed at, for example, the rear of the upper turning body 3. The engine 11 is a diesel engine using diesel fuel as fuel. The main pump 14 and a pilot pump 15 are connected to the output shaft of the engine 11.

The main pump 14 is installed at, for example, the rear of the upper turning body 3, and supplies hydraulic oil to the control valve 17 via a high-pressure hydraulic line 16. The main pump 14 is driven by the engine 11 as described above. The main pump 14 is, for example, a variable displacement hydraulic pump, and the angle (tilt angle) of a swash plate is controlled by a regulator 14A, as controlled by the controller 30, thereby adjusting the length of stroke of a piston and controlling a discharge flow rate (discharge pressure).

The control valve 17 is, for example, a hydraulic control device installed at the center of the upper turning body 3 and controls the hydraulic drive system in accordance with operations of the driving elements (hydraulic actuators) by the operator. Specifically, the control valve 17 controls the supply and discharge of hydraulic oil to the hydraulic actuators in accordance with operations of the respective driving elements by the operator. The traveling hydraulic motors 1A (for right) and 1B (for left), the turning hydraulic motor 2A, the boom cylinder 7, the arm cylinder 8, the bucket cylinder 9, and the like are connected to the control valve 17 via the high-pressure hydraulic line. The control valve 17 is provided between the main pump 14 and the hydraulic actuators. The control valve 17 is a valve unit that includes a plurality of hydraulic control valves (direction control valves) for controlling the flow rate and flow direction of hydraulic oil supplied from the main pump 14 to the respective hydraulic actuators.

An operating system of the shovel 100 according to the present embodiment includes the pilot pump 15, the operation device 26, and an operating pressure sensor 15a.

The pilot pump 15 is installed at, for example, the rear of the upper turning body 3. The pilot pump 15 supplies pilot pressure to the operation device 26 via a pilot line 25. The pilot pump 15 is, for example, a fixed displacement hydraulic pump driven by the engine 11 as described above.

The operation device 26 is provided in the vicinity of the operator's seat in the cabin 10, and allows the operator to perform operations of operational elements (such as the lower traveling body 1, the upper turning body 3, the boom 4, the arm 5, and the bucket 6). In other words, the operation device 26 is an operation unit configured to operate the hydraulic actuators (such as the traveling hydraulic motors 1A and 1B, the turning hydraulic motor 2A, the boom cylinder 7, the arm cylinder 8, and the bucket cylinder 9) that drive the respective operational elements. The operation device 26 includes, for example, a lever, a pedal, and the like.

As illustrated in FIG. 2, the operation device 26 is, for example, a hydraulic pilot device that outputs a hydraulic pressure (pilot pressure) corresponding to details of an operation. The operation device 26 uses hydraulic oil supplied from the pilot pump 15 through the pilot line 25 to output a predetermined pilot pressure corresponding to details of an operation (such as an operation direction and an operation amount) to a hydraulic line 25a. The operation device 26 is connected to the control valve 17 via the hydraulic line 25a. Accordingly, a pilot signal (pilot pressure) corresponding to operation states of the lower traveling body 1, the upper turning body 3, the boom 4, the arm 5, the bucket 6, and the like in the operation device 26 is input into the control valve 17. As a result, the control valve 17 can drive each of the hydraulic actuators in accordance with an operation state of the operation device 26.

The operation device 26 may be an electric device that outputs an electric signal (hereinafter referred to as an "operation signal") in accordance with details of an operation. The operation signal is input into the controller 30. The controller 30 outputs a control command corresponding to the operation signal to a hydraulic control valve (such as a solenoid proportional valve) (hereinafter referred to as an "operation control valve"). The operation control valve can use hydraulic oil supplied from the pilot pump 15 to output a pilot pressure, corresponding to a control command from the controller 30, namely a pilot pressure corresponding to details of an operation, and cause the pilot pressure to act on the control valve 17. As a result, the control valve 17 can drive each of the hydraulic actuators in accordance with an operation state of the operation device 26.

Further, if the shovel 100 is remotely operated, the controller 30 may use the above-describe operation control valve to implement a remote operation of the shovel 100. Specifically, the controller 30 may output, to the operation control valve, a control command corresponding to details of a remote operation specified by a remote operation signal received by a communication device 60. Then, the operation control valve may use hydraulic oil supplied from the pilot pump 15 to output a pilot pressure corresponding to the control command output from the controller 30, and cause the pilot pressure to act on the control valve 17. As a result, the control valve 17 can drive each of the hydraulic actuators in accordance with details of the remote operation.

If the shovel 100 includes the automatic operation function, the controller 30 may use the above-describe operation control valve to implement the automatic operation function of the shovel 100. Specifically, the controller 30 may output a control command, corresponding to the movement of a hydraulic actuator, to the operation control valve regardless of an operation by the operator. As a result, a pilot pressure corresponding to the movement of the hydraulic actuator in accordance with the automatic operation function is supplied from the operation control valve to the control valve 17. Accordingly, the control valve 17 can implement the movement of each of the hydraulic actuators in accordance with the automatic operation function.

The operating pressure sensor 15a detects a pilot pressure on the secondary side of the operation device 26, that is, a pilot pressure (hereinafter referred to as an "operating pressure") corresponding to an operation state of each of the operational elements in the operation device 26. The operating pressure sensor 15a is connected to the controller 30, and the operating pressure (detection signal) corresponding to an operation state of each of the lower traveling body 1, the upper turning body 3, the boom 4, the arm 5, the bucket 6, and the like is input into the controller 30. Accordingly, the controller 30 can ascertain the operation state of each of the lower traveling body 1, the upper turning body 3, and the attachment (the boom 4, the arm 5, and the bucket 6) of the shovel 100.

If the operation device 26 is an electric device, the operating pressure sensor 15a is not necessarily provided. This is because the controller 30 can ascertain details of an operation of the operation device 26 based on an operation signal that is input into the controller 30 by the operation device 26.

A control system of the shovel 100 according to the present embodiment includes the controller 30, the image capturing device 40, a state detecting device 42, a surrounding environment information obtaining device 44, a display device 50, a sound output device 52, input device 54, a horn 56, and a communication device 60.

The controller 30 performs drive control of the shovel 100. The functions of the controller 30 may be implemented by any hardware, software, or a combination thereof. The controller 30 is mainly configured by a microcomputer that includes a central processing unit (CPU), a random-access memory (RAM), a memory device (hereinafter may also be referred to as a "primary storage device") such as a random-access memory (RAM), a non-volatile secondary storage device such as a read-only memory (ROM), and an input/output interface. For example, the controller 30 implements various functions by executing, on the CPU, one or more programs stored in the secondary storage device. The same applies to a controller 210 of the management apparatus 200 and a controller 310 of the support apparatus 300, which will be described later.

For example, the controller 30 monitors the entry of a predetermined monitoring target (hereinafter simply referred to as a "monitoring target") into a range relatively close to the shovel 100 (hereinafter referred to as a "monitoring area") based on an image of an area surrounding the shovel 100 captured by the image capturing device 40. Examples of the monitoring target include not only persons such as workers and supervisors at a work site, but also any objects such as moving objects (e.g., work vehicles) and stationary objects (e.g., stationary materials and terrain obstacles such as rocks).

Further, upon detecting an unexpected use of the shovel 100, the controller 30 stores unexpected use log information indicating the detection of the unexpected use in an internal memory (a storage unit 307 as will be described later).

Further, the controller 30 may automatically switch between operating modes of the shovel 100, based on an operation performed by an operator on the input device 54 or based on the situation of the shovel 100. For example, the operating modes of the shovel 100 include a crane mode for performing crane work, which will be described later. The controller 30 switches between the crane mode and any other operating mode (hereinafter collectively referred to as a "non-crane mode") in response to an operation on the input device 54 (specifically, a crane mode switch 54a), which will be described later. The crane mode is the operating mode of the shovel 100 in which the movement speed of the attachment responding to the operator's operation through the operation device 26 is relatively slow as compared to the non-crane mode. Specifically, in crane mode, the controller 30 sets the target rotational speed of the engine 11 to be slower than that in non-crane mode. Accordingly, during crane work, the movement of the boom 4 responding to the operator's operation is relatively slow, thereby allowing the shovel 100 to stably hoist and move a suspended load.

Further, the controller 30 performs processes related to the remote operation function and the automatic operation function as described above.

The controller 30 includes a surroundings monitoring control unit 301, an unexpected use determining unit 302, an unexpected use warning unit 303, an information obtaining unit 304, a log recording unit 305, and a log transmitting unit 306 as functional units, which are implemented by executing, on the CPU, one or more programs stored in the secondary storage device. Further, the controller 30 includes the storage unit 307, as a storage area defined in an internal memory of the secondary storage device.

Note that some of the functions of the controller 30 may be implemented by another controller. Namely, the functions of the controller 30 may be implemented by a plurality of controllers in a distributed manner. Further, a storage area corresponding to the storage unit 307 may be provided outside the controller 30, and may be defined in an external storage device that is communicatively connected to the controller 30.

The image capturing device 40 is attached to the top of the upper turning body 3. The image capturing device 40 captures an image of an area surrounding the shovel 100 and outputs the captured image. The captured image may include an image of an object such as a monitoring target located in the vicinity of the shovel 100. That is, the image capturing device 40 outputs an image as detection information related to an object located in the vicinity of the shovel 100. The image capturing device 40 includes cameras 40B, 40F, 40L, and 40R.

The cameras 40B, 40F, 40L, and 40R are attached to the upper rear end, the upper front end (for example, the upper front end of the cabin 10), the upper left end, and the upper right end of the upper turning body 3, respectively, and capture images of areas in front of, behind, to the left of, and to the right of the upper turning body 3, respectively. Further, the camera 40F may be installed inside the cabin 10, and may capture an image in front of the upper turning body 3 through the front window at the front of the cabin 10. For example, each of the cameras 40B, 40F, 40L, and 40R is a monocular wide angle camera having a very wide angle of view. Specifically, each of the cameras 40B, 40F, 40L, and 40R is attached to the top of the upper turning body 3 such that the optical axis points obliquely downward. Further, each of the cameras 40B, 40F, 40L, and 40R captures an image in a vertical imaging range from the ground in the vicinity of the shovel 100 to an area far from the shovel 100. In addition, the imaging range of the camera 40F includes the distal end of the attachment. That is, the imaging range of the camera 40F includes the bucket 6, the hook 80, and a load suspended from the hook 80. While the shovel 100 is in operation, the cameras 40F, 40B, 40L, and 40R output captured images at predetermined intervals (for example, every 1/30 seconds), and the output captured images are input into the controller 30.

The state detecting device 42 obtains detection information related to various states of the shovel 100. The state detecting device 42 may obtain detection information for specifying an operator who operates the shovel 100 and detection information related to various states of the operator. The detection information related to various states of the shovel 100 obtained by the state detecting device 42 is input into the controller 30.

For example, the state detecting device 42 obtains detection information related to the orientation state of the shovel 100. Specifically, the state detecting device 42 may include a body orientation sensor that outputs detection information related to the orientation state of a body (such as the upper turning body 3) of the shovel 100. For example, the body orientation sensor may output detection information related to a tilt state and a turning angle around the front-rear axis and a tilt state and a turning angle around the left-right axis of the upper turning body 3. More specifically, the body orientation sensor may include a rotary encoder provided at the turning axis of the upper turning body 3, and include an acceleration sensor, an angular velocity sensor, a 6-axis sensor, and an inertial measurement unit (IMU) attached to any positions of the upper turning body 3. Further, the state detecting device 42 may include an attachment orientation sensor that obtains detection information related to the orientation state of the attachment. The attachment orientation sensor may include a boom orientation sensor, an arm orientation sensor, and a bucket orientation sensor that output detection information related to the elevation angle of the boom 4 relative to the upper turning body 3 (hereinafter referred to as a "boom angle"), the elevation angle of the arm 5 relative to the boom 4 (hereinafter referred to as an "arm angle"), and the elevation angle of the bucket 6 relative to the arm 5 (hereinafter referred to as a "bucket angle"). More specifically, each of the boom orientation sensor, the arm orientation sensor, and the bucket orientation sensor may include a rotary encoder attached to a joint of links of the attachment, and include an acceleration sensor, an angular velocity sensor, a 6-axis sensor, and an IMU attached to links of the attachment.

Further, the state detecting device 42 obtains detection information related to the movement state of the shovel 100. Specifically, the state detecting device 42 includes a traveling state sensor that outputs detection information related to the traveling state of the lower traveling body 1. For example, the traveling state sensor may output detection information related to the traveling speed and direction (forward or backward) of the lower traveling body 1. More specifically, the traveling state sensor may include an acceleration sensor that is attached to the lower traveling body 1, a flow sensor that measures the flow rate of hydraulic oil supplied to the traveling hydraulic motors 1A and 1B, and a camera that is capable of capturing an image of the crawlers of the traveling body 1. Further, the state detecting device 42 may include a turning state sensor that outputs detection information related to a movement state of the upper turning body 3. For example, the turning state sensor may output detection information related to turning acceleration and turning angular acceleration of the upper turning body 3. More specifically, the turning state sensor may include a rotary encoder provided at the turning axis of the upper turning body 3, and include an acceleration sensor, an angular velocity sensor, a 6-axis sensor, and an inertial measurement unit (IMU) attached to any positions of the upper turning body 3. Further, the state detecting device 42 may include a boom state sensor, an arm state sensor, and a bucket state sensor that output detection information related to a movement state of the attachment. For example, the boom state sensor, the arm state sensor, and the bucket state sensor may output detection information related to acceleration and angular acceleration of at least one of the boom 4, the arm 5, and the bucket 6. More specifically, each of the boom state sensor, the arm state sensor, and the bucket state sensor may include a rotary encoder attached to a joint of links of the attachment, and include an acceleration sensor, an angular velocity sensor, a 6-axis sensor, and an IMU attached to links of the attachment.

Further, for example, the state detecting device 42 outputs detection information related to a load state of the attachment of the shovel 100. Specifically, the state detecting device 42 includes an attachment load state sensor that outputs detection information related to the thrust of hydraulic actuators (the boom cylinder 7, the arm cylinder 8, and the bucket cylinder 9) that drive the boom 4, the arm 5, and the bucket 6. More specifically, the attachment load state sensor may include a cylinder pressure sensor that detects the cylinder pressure of at least one of the boom cylinder 7, the arm cylinder 8, and the bucket cylinder 9 (specifically, the pressure of at least one of a rod-side oil chamber and a bottom-side oil chamber).

Further, for example, the state detecting device 42 outputs detection information related to the direction of the lower traveling body 1 (the crawlers) relative to the upper turning body 3 (hereinafter referred to as a "crawler direction"). Specifically, the state detecting device 42 includes a turning state sensor that outputs detection information related to the turning state (turning angle, for example) of the upper turning body 3. More specifically, the turning state sensor may include a turning angle sensor attached to a swivel joint of the upper turning body 3, and include an acceleration sensor, an angular velocity sensor, a 6-axis sensor, and an IMU attached to any positions of the upper turning body 3.

Further, for example, the state detecting device 42 outputs detection information related to the weight of an object at the distal end of the attachment. Specifically, the state detecting device 42 outputs detection information related to the weight of soil contained in the bucket 6 or the weight of a load suspended from the hook 80. More specifically, the state detecting device 42 may include an attachment load state sensor (such as a cylinder sensor that detects the pressure of the bottom-side oil chamber of the boom cylinder 7 (hereinafter referred to as a "boom bottom pressure")), and may include a boom orientation sensor, an arm orientation sensor, and a bucket orientation sensor that detect the orientation state of the attachment, which corresponds to the position of the bucket 6. This is because there is a correlation between the load state of the attachment and the weight of an object at the distal end of the attachment. Further, the correlation between the load state of the attachment and the weight of an object at the distal end of the attachment changes based on the position of the bucket 6. The state detecting device 42 may also include load sensors attached to the hook 80 and the bucket 6.

Further, for example, the state detecting device 42 outputs detection information related to reaction force applied to the distal end of the attachment (bucket 6) by a work target such as the ground. Specifically, the state detecting device 42 may include an attachment load state sensor and an attachment orientation sensor (a boom orientation sensor, an arm orientation sensor, and a bucket orientation sensor). This is because there is a correlation between reaction force applied to the distal end of the attachment by the work target and the load state of the attachment. Further, the correlation between reaction force applied to the distal end of the attachment by the work target and the load state of the attachment changes based on the orientation state of the attachment.

Further, for example, the state detecting device 42 outputs detection information related to the state of work of the shovel 100. Specifically, the state detecting device 42 outputs detection information related to the type of work performed by the shovel 100. Examples of the type of work include excavation work, loading work for loading soil into a truck, leveling work, rolling work, and work related to aerial movement (aerial work). The state detecting device 42 includes a cylinder pressure sensor that detects the pressure (pressure of at least one of the rod-side oil chamber and the bottom-side oil chamber) of each of the boom cylinder 7, the arm cylinder 8, and the bucket cylinder 9. Accordingly, the controller 30 can determine (estimate) the type of work performed by the shovel 100 based on transition of the pressure of each of the boom cylinder 7, the arm cylinder 8, and the bucket cylinder 9 and operation states of the boom 4, the arm 5, and the bucket 6 through the operation device 26. The state detecting device 42 may also include sensors capable of detecting a movement state of the attachment. For example, the state detecting device 42 may include a camera, millimeter wave radar, and LIDAR. Accordingly, the controller 30 can determine (estimate) the type of work performed by the shovel 100 by detecting the movement state of the attachment based on information output from these sensors.

Further, for example, the state detecting device 42 obtains detection information for identifying an operator performing an operation. Specifically, the state detecting device 42 may obtain image information including an image of an operator performing an operation. In this case, the state detecting device 42 includes a camera that is installed in the cabin 10 and capable of capturing an image of the upper body of an operator including the operator's face. The state detecting device 42 may obtain physical feature information (such as fingerprint information and iris information) of an operator performing an operation. In this case, the state detecting device 42 includes a fingerprint sensor provided on a lever or the like included in the operation device 26, an iris sensor provided at a position facing an operator's face within the cabin 10.

The controller 30 may identify an operator based on a predetermined operation performed by the operator on the input device 54. Specifically, an operator selection screen may be displayed on the display device 50 at the time of starting the shovel 100, and the controller 30 may select an operator from a list of pre-registered operators on the operator selection screen, based on a predetermined operation performed by the operator on the input device 54. In this manner, the controller 30 can identify a specific operator performing the operation.

Further, for example, the state detecting device 42 obtains detection information related to the state of an operator performing an operation. Specifically, the state detecting device 42 may obtain the operator's biological information (such as an electrocardiogram and an electroencephalogram). In this case, the state detecting device 42 may include an electroencephalograph embedded in a helmet worn by the operator and capable of wirelessly communicating with the controller 30, and an electrocardiograph embedded in a wearable device attached to the operator's arm and capable of wirelessly communicating with the controller 30.

The surrounding environment information obtaining device 44 obtains information related to an environment surrounding the shovel 100 (hereinafter referred to as "surrounding environment information"). The surrounding environment information of the shovel 100 obtained by the surrounding environment information obtaining device 44 is input into the controller 30.

For example, the surrounding environment information obtaining device 44 includes a real-time clock (RTC), and obtains date and time information including a date, day of the week, and time.

The date and time information may be obtained by a time counting unit (such as an RTC) within the controller 30.

Further, for example, the surrounding environment information obtaining device 44 obtains weather information of a location where the shovel 100 works. Specifically, the surrounding environment information obtaining device 44 may be connected to the communication network NW through the communication device 60, and may obtain weather information from a server or a website for predetermined weather information. Furthermore, the surrounding environment information obtaining device 44 includes an illuminance sensor, a raindrop detection sensor, and the like, and may obtain weather information based on illuminance, the presence or absence of rain, and the like output by the illuminance sensor, the raindrop detection sensor, and the like.

Further, for example, the surrounding environment information obtaining device 44 obtains geographical location information of the shovel 100. Specifically, the surrounding environment information obtaining device 44 may include a global navigation satellite system (GNSS), and may obtain position information of the shovel 100 based on signals from three or more satellites in the air above the shovel 100.

Further, for example, the surrounding environment information obtaining device 44 obtains detailed information related to surrounding conditions of the shovel 100 (hereinafter referred to as "detailed information of surrounding conditions"). Specifically, the surrounding environment information obtaining device 44 may obtain an image (image information) representing surrounding conditions of the shovel 100 from a camera such as the image capturing device 40 attached to the shovel 100. The surrounding environment information obtaining device 44 may obtain information related to a three-dimensional topography (hereinafter referred to as "topographic information") in the vicinity of the shovel 100. In this case, the surrounding environment information obtaining device 44 includes a distance sensor such as a camera, a millimeter-wave radar, or a LIDAR, and obtains topographic information in the vicinity of the shovel 100 based on an image output from the distance sensor. In this case, the surrounding environment information obtaining device 44 is connected to the communication network NW through the communication device 60, and obtains topographic information at a work site of the shovel 100 from a management server for computer-aided construction at the work site. The surrounding environment information obtaining device 44 may obtain information related to surroundings monitoring control (hereinafter referred to as "surroundings monitoring control information"), which will be described later. In this case, the surrounding environment information obtaining device 44 obtains an activation state of a surroundings monitoring control function (including information as to whether the surroundings monitoring control function is included or is turned on/off) and detection information of a monitoring target.

Some or all of the functions of the surrounding environment information obtaining device 44 may be included in the controller 30.

The display device 50 is disposed in the vicinity of the operator's seat within the cabin 10, specifically at a position easily visible from the operator seated in the cabin 10. The display device 50 displays various kinds of image information to be provided to the operator, as controlled by the controller 30. The display device 50 may be a liquid crystal display or an organic electroluminescent (EL) display, or may be a touch panel display that also serves as an operation unit. The display device 50 displays, for example, an image (hereinafter referred to as a "peripheral image") representing a situation in the vicinity of the shovel 100 based on an image captured by the image capturing device 40. The peripheral image may be an image (through-the-lens image) captured by the image capturing device 40, or may be an image generated by the controller 30 based on an image captured by the image capturing device 40 (such as a viewpoint-converted image or a combined image generated based on images captured by the cameras 40F, 40B, 40L, and 40R).

The sound output device 52 is disposed in the vicinity of the operator's seat within the cabin 10. The sound output device 52 outputs a predetermined sound as controlled by the controller 30. The sound output device 52 may be a buzzer, a speaker, or the like.

The input device 54 is disposed within the reach of the operator seated in the cabin 10. The input device 54 receives various operation inputs, and outputs signals corresponding to the operation inputs to the controller 30. The input device 54 may include a touch panel attached to the display device 50, a knob switch provided at the end of a lever portion of a lever included in the operation device 26, and a button switch, a lever, a toggle, a dial, and the like provided in the vicinity of the display device 50. More specifically, the input device 54 includes the crane mode switch 42a and a horn switch 54b. A signal corresponding to details of an operation performed by the operator on the input device 54 is input into the controller 30.

The crane mode switch 54a receives an operation input for switching the operating mode of the shovel 100 between the crane mode and the non-crane mode.

The horn switch 54b receives an operation input for sounding the horn 56. The horn switch 54b can be returned to the default position by the elastic force of a spring or the like, and outputs an electric signal corresponding to an operation input only while an operation force is applied. The electrical signal corresponding to the operation input of the horn switch 54b acts directly on the horn 56, and the horn 56 sounds in response to the electrical signal. The electrical signal corresponding to the operation input of the horn switch 54b is also input into the controller 30. Accordingly, the controller 30 can ascertain that the operation for sounding the horn 56 has been performed.

The horn 56 is activated (sounds) in response to an electrical signal from the horn switch 54b, and outputs an alarm sound to alert workers in the vicinity of the shovel 100.

The communication device 60 is any device that communicates with an external apparatus such as the management apparatus 200 through the communication network NW. The communication device 60 is a mobile communication module conforming to a predetermined mobile communication standard such as Long-Term Evolution (LTE), the 4th generation technology standard (4G), or the 5th generation technology standard (5G).

The surroundings monitoring control unit 301 performs control related to a surroundings monitoring function ("surroundings monitoring control") to monitor the entry of a monitoring target into a monitoring area in the vicinity of the shovel 100 based on an image captured by the image capturing device 40.

For example, the surroundings monitoring control unit 301 identifies a monitoring target in an image captured by the image capturing device 40 by applying a machine learning-based classifier, various types of known image processing techniques, artificial intelligence (AI), and the like. Further, the surroundings monitoring control unit 301 can determine (estimate) the position (the actual position, such as the foot position) of the identified monitoring target (person) included in the image captured by the monocular image capturing device 40 by applying various types of known methods. Accordingly, the surroundings monitoring control unit 301 can detect a monitoring target in a monitored area, and ascertain the position of the detected monitoring target.

Further, for example, upon detecting a monitoring target, the surroundings monitoring control unit 301 outputs a warning to the interior or the exterior of the cabin 10 by using an audible method (such as outputting a sound from the sound output device 52) or using a visual method (such as displaying a predetermined image on the display device 50). Further, upon detecting a monitoring target, the surroundings monitoring control unit 301 may restrict movements of various operational elements (such as the lower traveling body 1, the upper turning body 3, and the attachment) of the shovel 100. In this case, the surroundings monitoring control unit 301 may restrict (stop) the movement of the shovel 100 by controlling a gate lock valve provided in the pilot line 25 between the pilot pump 15 and the operation device 26 such that the pilot line is in a non-communication state. Further, the surroundings monitoring control unit 301 may restrict the movement of the shovel 100 by controlling a pressure reducing valve provided in a pilot line on the secondary side of the operation device 26 such that a pilot pressure corresponding to the operation state of the operation device 26 is reduced and acts on the control valve 17.

The surroundings monitoring function may be forcibly cancelled in response to a predetermined operation on the input device 54.

The unexpected use determining unit 302 determines whether an unexpected use of the shovel (that is, a predetermined movement corresponding to an unexpected use) occurs. In other words, the unexpected use determining unit 302 detects an unexpected use of the shovel 100 by determining whether the unexpected use of the shovel 100 occurs. Specifically, the unexpected use determining unit 302 repeats a process for determining whether any unexpected use of the shovel 100 occurs at a predetermined control interval from the start to the stop of the shovel 100.

Unexpected uses of the shovel 100 to be detected include a first use state (hereinafter referred to as "hoisting work in an unstable state") in which the shovel 100 performs hoisting work (crane work) while the stability of the body, including the lower traveling body 1 and the upper turning body 3, of the shovel 100 falls below a predetermined reference value. That is, predetermined movements of the shovel 100 to be detected include a first movement state in which the shovel 100 performs hoisting work (crane work) while the stability of the body, including the lower traveling body 1 and the upper turning body 3, of the shovel 100 falls below a predetermined reference value.

For example, FIG. 3A is a diagram illustrating a specific example of an unexpected use of the shovel 100. Specifically, FIG. 3A is a diagram illustrating "hoisting work in an unstable state". In this example, the shovel 100 is hoisting a suspended load SL while the distal end of the attachment (such as the bucket 6 or the hook 80) is relatively distant from the body of the shovel 100.

As illustrated in FIG. 3A, a static overturning moment (hereinafter referred to as a "static overturning moment") is acting on the shovel 100 to cause the body of the shovel 100 to overturn in the forward direction around a tipping fulcrum F due to a self-weight W4 of the boom 4, a self-weight W5 of the arm 5, a self-weight W6 of the bucket 6, and the weight WSL of the suspended load SL acting on the hook 80. Conversely, a resisting moment to resist the overturning of the body of the shovel 100 around the tipping fulcrum F by a self-weight W1 of the lower traveling body 1 including the self-weight of the turning mechanism 2 and a self-weight W3 of the upper turning body 3 is acting on the shovel 100. At this point, the tipping fulcrum F corresponds to the point of the ground surface contacted by the edge of the lower traveling body 1 facing the attachment. Therefore, if the weight WSL of the suspended load LS relatively increases, the static overturning moment relatively increases, and thus the stability of the body of the shovel 100 relatively decreases. Further, if the position of the bucket 6 is relatively distant from the body of the shovel 100, the static overturning moment relatively increases, and thus the stability of the body of the shovel 100 relatively decreases. Therefore, if the weight WSL of the suspended load LS exceeds a predetermined reference value or if the distance between the body of the shovel 100 and the bucket 6 exceeds a predetermined reference value, there would be a possibility that the shovel 100 would overturn in the forward direction. For this reason, "hoisting work in an unstable state", which is an unexpected use of the shovel 100, is preferably not performed.

The unexpected use determining unit 302 may determine that the shovel 100 is performing "hoisting work in an unstable state" if the shovel 100 is not in crane mode and the load suspended from the hook 80 exceeds a predetermined reference value (predetermined threshold). At this time, the unexpected use determining unit 302 can obtain (estimate) the weight of the load suspended from the hook 80 based on detection information of the state detecting device 42. Further, the unexpected use determining unit 302 can ascertain whether the shovel 100 is in crane mode based on the operation state of the crane mode switch 54a. Further, the unexpected use determining unit 302 may determine that the shovel 100 is performing "hoisting work in an unstable state" if the hook 80 is taken out of a storage part and the weight of the load suspended from the hook 80 exceeds the predetermined reference value (predetermined threshold). At this time, the unexpected use determining unit 302 can determine whether the hook 80 is stored in the storage part based on detection information of the state detecting device 42. Further, the unexpected use determining unit 302 may determine that the shovel 100 is performing "hoisting work in an unstable state" if the weight of the load suspended from the hook 80 exceeds the predetermined reference value (predetermined threshold) while hoisting work can be determined to be performed based on an image captured by the camera 40F.

Further, the unexpected use determining unit 302 may determine that the shovel 100 is performing "hoisting work in an unstable state" if the shovel 100 is in crane mode, the position of the bucket 6 departs from a predetermined stability range, and the bucket 6 is located at a relatively large distance from the body of the shovel 100. Further, the unexpected use determining unit 302 may determine that the shovel 100 is performing "hoisting work in an unstable state" if the hook 80 is taken out of the storage part, the position of the bucket 6 departs from the predetermined stability range, and the bucket 6 is located at a relatively large distance from the body of the shovel 100. Further, the unexpected use determining unit 302 may determine that the shovel 100 is performing "hoisting work in an unstable state" if the position of the bucket 6 departs from the predetermined stability range and the bucket 6 is located at a relatively large distance from the body of the shovel 100 while hoisting work can be determined to be performed based on an image captured by the camera 40F.

In addition, the unexpected uses of the shovel 100 to be detected include a second use state (hereinafter referred to as "turning/traveling while an object is detected") in which the shovel 100 turns or travels so as to approach a monitoring target while the monitoring target is detected in an area (hereinafter referred to as an "adjacent area") relatively adjacent to and surrounding the shovel 100 by the surroundings monitoring function. That is, the predetermined movements of the shovel 100 to be detected include a second movement state in which the shovel 100 turns or travels so as to approach a monitoring target while the monitoring target is detected in the adjacent area of the shovel 100 by the surroundings monitoring function. If the shovel 100 turns or travels so as to approach a monitoring target while the monitoring target is detected in the adjacent area of the shovel 100, there would be a possibility that the shovel 100 would contact the monitoring target. Further, the "turning/traveling while an object is detected" may also include a use state in which the shovel 100 travels away from a monitoring target while the monitoring target is detected in the adjacent area of the shovel 100 by the surroundings monitoring function. This is because moving the shovel 100 while the monitoring target is detected in the adjacent area of the shovel 100 would decrease safety. The "adjacent area" is preset as an area that is the same as the monitoring area or closer to the shovel 100 relative to the monitoring area. For example, the adjacent area is within 2 meters from the shovel 100 (upper turning body 3).

The unexpected use determining unit 302 may determine that the shovel 100 is "turning/traveling while an object is detected" if the upper turning body 3 is turning while a monitoring target is detected in the adjacent area by the surroundings monitoring function. Further, the unexpected use determining unit 302 may determine that the shovel 100 is "turning/traveling while an object is detected" if the lower traveling body 1 is traveling in a direction toward a monitoring target while the monitoring target is detected in the adjacent area by the surroundings monitoring function. At this time, the unexpected use determining unit 302 can determine whether the upper turning body 3 is turning based on the operation state of the upper turning body 3 through the operation device 26, which is identified by detection information of the operating pressure sensor 15a, detection information of the state detecting device 42, an image captured by the image capturing device 40, and the like. Further, the unexpected use determining unit 302 can determine whether the lower traveling body 1 is traveling in the direction toward the monitoring target based on the operation state of the lower traveling body 1 through the operation device 26, which is identified by detection information of the operating pressure sensor 15a, detection information of the state detecting device 42, an image captured by the image capturing device 40, and the like.

In addition, the unexpected uses of the shovel 100 to be detected include a third use state (hereinafter referred to as "continuous work while an object is detected") in which the shovel 100 continues to work while a monitoring target is detected in the adjacent area of the shovel 100 by the surroundings monitoring function. That is, the predetermined movements of the shovel 100 to be detected include a third movement state in which the shovel 100 continues to work while a monitoring target is detected in the adjacent area of the shovel 100 by the surroundings monitoring function. If the shovel 100 continues to work while a monitoring target is detected in the adjacent area of the shovel 100, there would be a possibility that the shovel 100 would contact the monitoring target. This is because moving the shovel 100 while the monitoring target is detected in the adjacent area of the shovel 100 would decrease safety.

The unexpected use determining unit 302 may determine that "continuous work while an object is detected" occurs if the attachment is moved or is operated while a monitoring target is detected in the adjacent area by the surroundings monitoring function. At this time, the unexpected use determining unit 302 can determine whether the attachment is moved based on detection information of the state detecting device 42, an image captured by the camera 40F, and the like. Further, the unexpected use determining unit 302 can determine whether the attachment is operated based on the operation state of the attachment through the operation device 26, which is identified by detection information of the operating pressure sensor 15a.

In addition, the unexpected uses of the shovel 100 to be detected include a fourth use state (hereinafter referred to as "starting to travel without sounding a horn") in which the lower traveling body 1 starts to travel without sounding the horn 56. That is, the predetermined movements of the shovel 100 to be detected include a fourth movement state in which the lower traveling body 1 of the shovel 100 starts to travel without sounding the horn 56. From the viewpoint of safety, when the shovel 100 starts to travel, it is preferable to notify workers in the vicinity of the shovel 100 that the shovel 100 starts to travel.

The unexpected use determining unit 302 may determine that the shovel 100 is "starting to travel without sounding a horn" if the lower traveling body 1 of the shovel 100 starts to travel without sounding the horn 56 for a predetermined period of time (5 seconds, for example). At this time, the unexpected use determining unit 302 can determine whether the horn 56 is sounded based on the operation state of the horn switch 54b. Further, the unexpected use determining unit 302 can determine whether the lower traveling body 1 has started to travel based on the operation state of the lower traveling body 1 through the operation device 26, which is identified by detection information of the operating pressure sensor 15a, detection information of the state detecting device 42 and the like.

In addition, the unexpected uses of the shovel 100 to be detected include a fifth use state (hereinafter referred to as "traveling downward in an unstable orientation state") in which the shovel 100 travels down a slope while the orientation state of the shovel 100 is unstable with the bucket 6 being raised to a relatively high position above the ground (specifically, to a high position greater than a predetermined threshold). That is, the predetermined movements of the shovel 100 to be detected include a fifth movement state in which the shovel 100 travels down a slope while the orientation state of the shovel 100 is unstable with the bucket 6 being raised to a relatively high position above the ground.

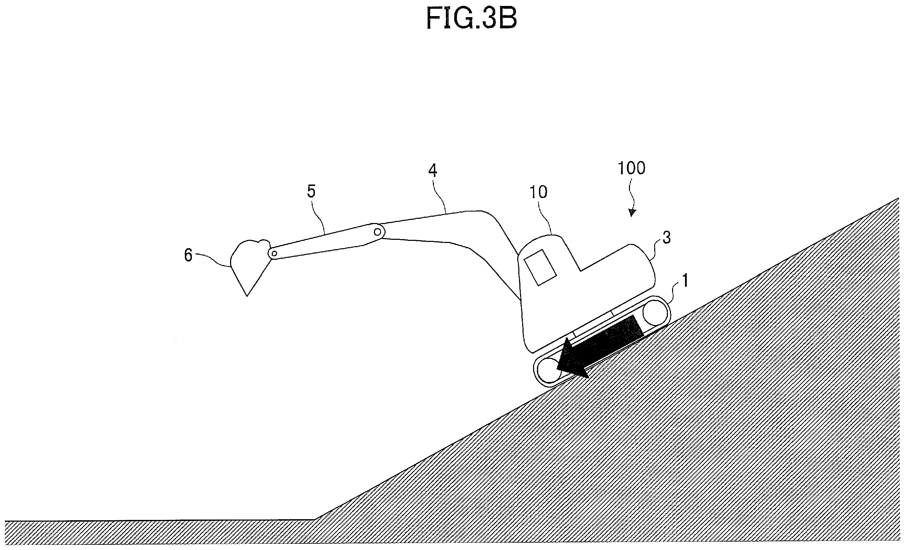

For example, FIG. 3B is a diagram illustrating a specific example of an unexpected use of the shovel 100. Specifically, FIG. 3B is a diagram illustrating "traveling downward in an unstable orientation state". In this example, the shovel 100 is traveling down a slope while the orientation state of the shovel 100 is unstable with the bucket 6 being raised to a relatively high position above the ground.

In a case where the bucket 6 is at a relatively low position above the ground, even if the shovel 100 is likely to tip over forward (that is, in the downward direction) while traveling down the slope, the bucket 6 can contact the ground and the attachment can serve as a prop, thereby preventing the tipping of the shovel 100.

Conversely, as illustrated in FIG. 3B, if the shovel 100 is likely to tip over forward (in the downward direction) while traveling down the slope, with the bucket 6 being located at a relatively high position above the ground, the bucket 6 would not immediately contact the ground and the attachment would not serve as a prop. Therefore, there would be a possibility of the shovel 100 tipping over forward. For this reason, "traveling downward in an unstable orientation state", which is an unexpected use of the shovel 100, is preferably not performed.

The unexpected use determining unit 302 may determine that the shovel 100 is "traveling downward in an unstable orientation state" if the lower traveling body 1 is traveling in the downward direction while the bucket 6 is at a relatively high position above the ground. At this time, the unexpected use determining unit 302 can ascertain the position of the bucket 6 based on detection information of the state detecting device 42, an image captured by the camera 40F, and the like. Further, the unexpected use determining unit 302 can determine whether the shovel 100 is on the slope and ascertain the inclination direction of the slope based on detection information of the state detecting device 42, an image captured by the image capturing device 40, and the like. Further, the unexpected use determining unit 302 can determine whether the shovel 100 (lower traveling body 1) is traveling based on the operation state of the lower traveling body 1 through the operation device 26, which is identified by detection information of the operating pressure sensor 15a, detection information of the state detecting device 42, an image captured by the image capturing device 40, and the like.

In addition, the unexpected uses of the shovel 100 to be detected include a sixth use state (hereinafter referred to as "traveling across a slope") in which the shovel 100 travels across a slope. That is, the predetermined movements of the shovel 100 to be detected include a sixth movement state in which the shovel 100 travels across a slope. The sixth movement state in which the shovel 100 travels across a slope includes not only a state in which the travel direction of the shovel 100 is approximately perpendicular to the inclination direction of the slope in top view, but also a state in which a difference between the travel direction of the shovel 100 and the inclination direction of the slope is relatively large.

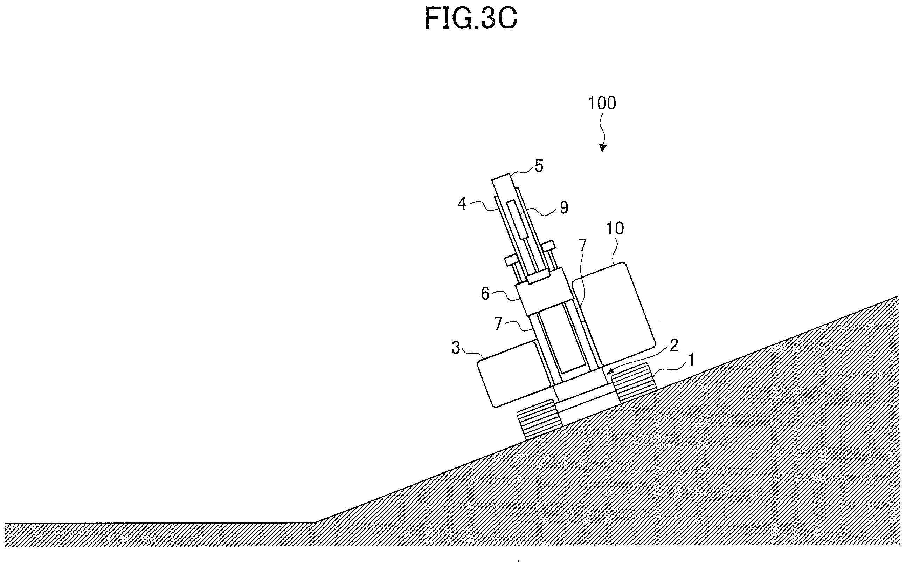

For example, FIG. 3C is a diagram illustrating a specific example of an unexpected use of the shovel 100. Specifically, FIG. 3C is a diagram illustrating "traveling across a slope". In this example, the shovel 100 is crossing the slope in a direction approximately perpendicular to the inclination direction of the slope in top view.

As illustrated in FIG. 3C, while the shovel 100 is traveling, the travel direction of the lower traveling body 1 approximately matches the direction of the attachment or a difference between the travel direction of the lower traveling body 1 and the direction of the attachment is relatively small in most cases. In such a case, the direction of the attachment may significantly deviate from the downward direction of the slope. Therefore, if the shovel 100 is likely to tip over in the downward direction (to the right of the upper turning body 3 in FIG. 3C) while traveling across the slope, the attachment would not serve as a prop. Thus, there would be a possibility of the shovel 100 tipping over in the downward direction. For this reason, "traveling across a slope", which is an unexpected use of the shovel 100, is preferably not performed.

The unexpected use determining unit 302 may determine that the shovel 100 is "traveling across a slope" if the lower traveling body 1 of the shovel 100 is traveling across the slope. At this time, the unexpected use determining unit 302 can determine whether the shovel 100 (lower traveling body 1) is traveling based on the operation state of the lower traveling body 1 through the operation device 26, which is identified by detection information of the operating pressure sensor 15a, detection information of the state detecting device 42, an image captured by the image capturing device 40, and the like. Further, the unexpected use determining unit 302 can determine whether the shovel 100 is on the slope and ascertain the travel direction of the lower traveling body 1 relative to the inclination direction of the slope, based on detection information of the state detecting device 42, an image captured by the image capturing device 40, and the like.

In addition, the unexpected uses of the shovel 100 to be detected include a seventh use state (hereinafter referred to as "work while the surroundings monitoring function is cancelled") in which the shovel 100 performs work while the surroundings monitoring function is cancelled. That is, the predetermined movements of the shovel 100 to be detected include a seventh movement state in which the shovel 100 performs work while the surroundings monitoring function is cancelled. If the shovel 100 performs work while the surroundings monitoring function is cancelled, the operator would not be able to easily identify a person or an obstacle in a blind spot, which is not preferable from the viewpoint of safety.

The unexpected use determining unit 302 may determine that the shovel 100 is performing "work while the surroundings monitoring function is cancelled" if the shovel 100 is performing predetermined work (such as excavation work, leveling work, or rolling work) while the surroundings monitoring function is forcibly cancelled. Further, the unexpected use determining unit 302 may determine that the shovel 100 is performing "work while the surroundings monitoring function is cancelled" if the shovel 100 continues to perform work (an operation) for more than a predetermined period of time while the surroundings monitoring function is forcibly cancelled. At this time, the unexpected use determining unit 302 can ascertain the type of work based on detection information of the state detecting device 42, an image captured by the camera 40F, and the like. Further, the unexpected use determining unit 302 can ascertain whether the shovel 100 is performing work (an operation) based on the operation state of the operation device 26, which is identified by detection information of the operating pressure sensor 15a, detection information of the state detecting device 42, an image captured by the image capturing device 40, and the like.

In addition, the unexpected uses of the shovel 100 to be detected include an eighth use state (hereinafter referred to as "hoisting work in non-crane mode") in which the shovel 100 performs hoisting work while the shovel 100 is not in crane mode (that is, in non-crane mode). That is, the predetermined movements of the shovel 100 to be detected include an eighth movement state in which the shovel 100 performs hoisting work while the shovel 100 is not in crane mode. If the shovel 100 is in non-crane mode, the movement speed of the attachment responding to the operator's operation through the operation device 26 becomes relatively faster than when the shovel 100 is in crane mode, thus making it difficult to stably hoist or move a suspended load.

The unexpected use determining unit 302 may determine that the shovel 100 is performing "hoisting work in non-crane mode" if the shovel 100 is performing hoisting work while the shovel 100 is in non-crane mode. At this time, the unexpected use determining unit 302 can ascertain whether the shovel 100 is performing hoisting work based on whether the hook 80 is taken out of the storage part. Further, the unexpected use determining unit 302 may ascertain whether the shovel 100 is performing hoisting work based on an image captured by the camera 40F.

In addition, the unexpected uses of the shovel 100 to be detected include a ninth use state (hereinafter referred to as "driving work with the bucket") in which the shovel 100 drives a target (such as a sheet pile) into the ground with the distal end of the attachment (such as the bucket 6). That is, the predetermined movements of the shovel 100 to be detected include a ninth movement state in which the shovel 100 drives a target into the ground with the distal end of the attachment.

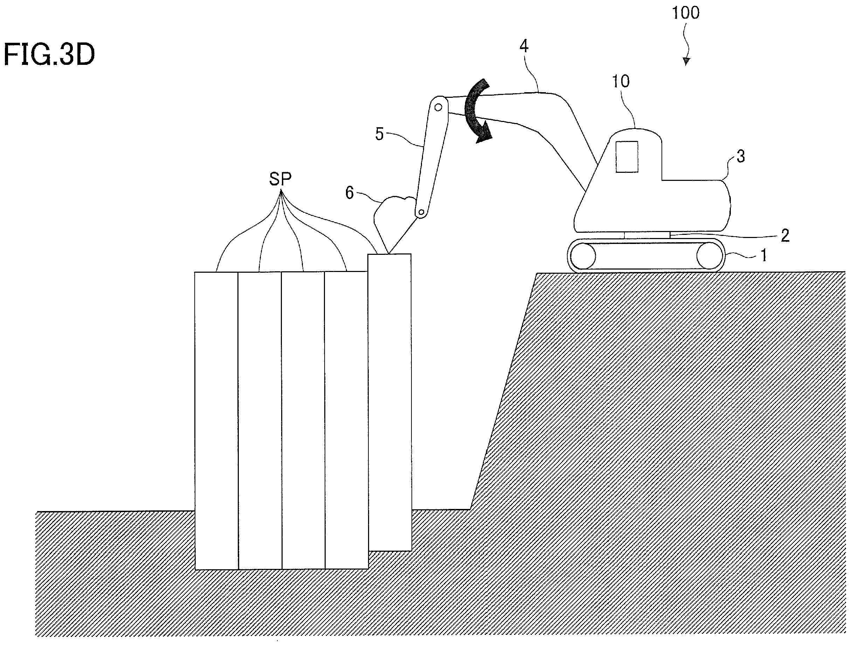

For example, FIG. 3D is a diagram illustrating a specific example of an unexpected use of the shovel 100. Specifically, FIG. 3D is a diagram illustrating "driving work with the bucket". In this example, the shovel 100 is driving a sheet pile SP into the ground with the bucket 6 while repeatedly raising and lowering the attachment.

As illustrated in FIG. 3D, when the shovel 100 drives the target (sheet pile SP) into the ground with the bucket 6 while raising and lowering the attachment, the reaction force acting on the distal end of the attachment from the target would become relatively greater than the reaction force from the ground. Therefore, there would be a possibility of the body of the shovel 100 being lifted or vibrating. Further, when the shovel 100 drives the target (sheet pile SP) into the ground with the distal end of the attachment while raising and lowering the attachment, the force of the attachment to drive the target into the ground relatively increases. Therefore, there would be a possibility that the target would be damaged, and as a result, pieces of the target would be scattered toward workers around the shovel 100. For this reason, "driving work with the bucket", which is an unexpected use of the shovel 100, is preferably not performed from the viewpoint of safety.

The unexpected use determining unit 302 may determine that the shovel 100 is performing "driving work with the bucket" if the shovel 100 is driving a target into the ground with the bucket 6 while repeatedly raising and lowering the attachment. At this time, the unexpected use determining unit 302 can ascertain whether the shovel 100 is repeatedly raising and lowering the attachment based on the operation state of the attachment through the operation device 26, which is identified by detection information of the operating pressure sensor 15a, detection information of the state detecting device 42, an image captured by the camera 40F, and the like. Further, the unexpected use determining unit 302 can ascertain whether the shovel 100 is driving the target with the bucket 6 based on whether the reaction force acting on the bucket 6 from the target is relatively greater than the reaction force from the ground. Further, the unexpected use determining unit 302 may ascertain whether the shovel 100 is driving the target with the bucket 6 based on an image captured by the camera 40F.

In addition, the unexpected uses of the shovel 100 to be detected include a tenth use state (hereinafter referred to as "use of a large bucket") in which the shovel 100 performs work with a bucket 6 having a relatively large size that exceeds a predetermined reference value being attached to the distal end of the attachment. That is, the predetermined movements of the shovel 100 to be detected include a tenth movement state in which the shovel 100 performs work with a bucket 6 having a relatively large size that exceeds a predetermined reference value being attached to the distal end of the attachment. Because the bucket 6 having a relatively large size has a relatively large weight, the amount of soil that can be contained in the bucket 6 becomes large. As a result, the shovel 100 is more likely to tip over. If the bucket 6 has a relatively large size that exceeds a predetermined reference value, the bucket 6, whose size is larger than those of a plurality of pre-registered, recommended buckets, is attached to the distal end of the arm 5.

The unexpected use determining unit 302 may determine that the "use of a large bucket" applies if the bucket 6 attached to the distal end of the arm 5 has a relatively large size that exceeds the predetermined reference value, and the attachment is moved or operated with the bucket 6 being attached. At this time, the unexpected use determining unit 302 can ascertain the size of the bucket 6 based on an image captured by the camera 40F. Further, the unexpected use determining unit 302 can ascertain whether the attachment is moved based on detection information of the state detecting device 42, an image captured by the camera 40F, and the like. Further, the unexpected use determining unit 302 can ascertain whether the attachment is operated based on the operation state of the attachment through the operation device 26, which is identified by detection information of the operating pressure sensor 15a.

In addition, the unexpected uses of the shovel 100 to be detected include an eleventh use state (hereinafter referred to as "traveling on a cliff") in which the shovel 100 travels on a cliff relatively close to the edge of the cliff. That is, the predetermined movements of the shovel 100 to be detected include an eleventh movement state in which the shovel 100 travels on a cliff relatively close to the edge of the cliff. This is because there would be a possibility that the shovel 100 would fall off the cliff. A location relatively close to the edge of the cliff may be within a predetermined distance (a few meters) from the edge of the cliff.

The unexpected use determining unit 302 may determine whether the shovel 100 is located on a cliff based on surrounding environment information obtained by the surrounding environment information obtaining device 44. If the unexpected use determining unit 302 determines that the shovel 100 is located on a cliff, the unexpected use determining unit 302 may determine whether the shovel 100 is located relatively close to the edge of the cliff based on surrounding environment information obtained by the surrounding environment information obtaining device 44. Further, the unexpected use determining unit 302 may determine whether the shovel 100 is traveling based on detection information of the state detecting device 42. In this manner, the unexpected use determining unit 302 can determine whether the shovel 100 is "traveling on a cliff".

In addition, the unexpected uses of the shovel 100 to be detected include a twelfth use state (hereinafter referred to as "high slip frequency") in which the lower traveling body 1 of the shovel 100 slips at a relatively high frequency. That is, the predetermined movements of the shovel 100 to be detected include a twelfth movement state in which the lower traveling body 1 of the shovel 100 slips at a relatively high frequency. If the lower traveling body 1 of the shovel 100 slips at a higher frequency than expected, there would be a possibility of the shovel 100 being in an environment where the use of the shovel 100 should be restricted, such as an environment in which the ground at a work site is frozen.

The unexpected use determining unit 302 may determine whether the lower traveling body 1 of the shovel 100 slips based on detection information of the state detecting device 42. Further, the unexpected use determining unit 302 may determine that the "high slip frequency" occurs if the number of slips that occur for a predetermined period of time (in 10 minutes, for example) is equal to or greater than a predetermined number. Further, the unexpected use determining unit 302 may determine whether the "high slip frequency" occurs based on temperature information and weather information in the vicinity of the shovel 100, which is obtained by the surrounding environment information obtaining device 44 instead of or in addition to detection information of the state detecting device 42. Whether or not the ground at a work site of the shovel 100 is frozen can be estimated based on the temperature information and the weather information in the vicinity of the shovel 100.

In addition, the unexpected uses of the shovel 100 to be detected include a thirteenth use state (hereinafter referred to as "use in adverse weather conditions") in which the shovel 100 performs work in adverse weather conditions. That is, the predetermined movements of the shovel 100 to be detected include a thirteenth movement state in which the shovel 100 performs work in adverse weather conditions. The use of the shovel 100 in adverse weather conditions should be restricted in terms of the safety and durability of the shovel 100.

The unexpected use determining unit 302 may determine whether the shovel 100 is "used in adverse weather conditions" based on weather information obtained by the surrounding environment information obtaining device 44.

In addition, the unexpected uses of the shovel 100 to be detected include a fourteenth use state (hereinafter referred to as "high vibration frequency") in which the shovel 100 vibrates at a relatively high frequency. That is, the predetermined movements of the shovel 100 to be detected include a fourteenth movement state in which the shovel 100 vibrates at a relatively high frequency. A situation where the shovel 100 vibrates at a relatively high frequency due to the operator's careless operation or the like is not desirable in terms of the durability and life of the shovel 100.

The unexpected use determining unit 302 may determine whether the shovel 100 is vibrating based on detection information of the state detecting device 42.

When determining whether the above-described unexpected uses occur, the unexpected use determining unit 302 may determine whether any of the unexpected uses of the shovel 100 occurs by taking into account information (such as topographic information at a work site of the shovel 100) other than information output from the surrounding environment information obtaining device 44. The topographic information at the work site of the shovel 100 may be transmitted from the management apparatus 200 to the shovel 100 in advance.

As described, the unexpected use determining unit 302 detects unexpected use of the shovel 100 by determining whether at least one of a predetermined movement corresponding to the unexpected use of the shovel 100 and a predetermined action is performed.

The unexpected uses of the shovel 100 to be detected may include all or some of the above-described first use state to fourteenth use states, or may include other use states.

Types of unexpected uses of the shovel 100 to be detected by the unexpected use determining unit 302 from among a plurality of types of unexpected uses (a plurality of candidates) may be automatically set in accordance with given conditions, or may be selected by a user such as an operator of the shovel 100.

For example, combination patterns of unexpected uses to be detected may be prepared for respective equipment specifications of the shovel 100. This is because a plurality of shovels 100 may include different equipment, and unexpected uses that are likely to occur may differ for each equipment specification. For example, an equipment specification of the shovel 100 may include whether or not the surroundings monitoring function is included, whether or not an automatic operation function is included, the type of the automatic operation function (the semi-automatic operation function, the fully automatic operation function, the autonomous operation function, or the like), and the type of the end attachment. The equipment specification of the shovel 100 is often determined at the time of manufacturing. Therefore, unexpected uses included in a combination pattern associated with the equipment specification of the shovel 100 may be automatically set beforehand. Further, equipment such as the end attachment may be replaced with another equipment in accordance with the work content. Therefore, the controller 30 may automatically set the unexpected uses included in the combination pattern associated with the equipment specification of the shovel 100. In this case, the current state of added or replaced equipment (such as the type of the currently attached end attachment) may be input by the operator on a predetermined movement screen of the display device 50 through the input device 54.

Further, the controller 30 may cause the display device 50 to display an operation screen (hereinafter referred to as a "detection target setting screen") for selecting and setting types of unexpected uses to be detected from among a plurality of types of unexpected uses that can be detected. Accordingly, the user can select unexpected uses to be detected on the detection target setting screen through the input device 54. The controller 30 may set the unexpected uses to be detected in response to an operation input performed by the user on the detection target setting screen through the input device 54. Accordingly, the controller 30 (unexpected use determining unit 302) detects the unexpected uses selected by the user from among the plurality of unexpected uses that can be detected.

The detection target setting screen may display a list of the plurality of types of unexpected uses that can be detected, and the user can select any unexpected uses to be detected from the list.

Further, combination patterns of unexpected uses to be detected may be prepared for respective work contents or use environments of the shovel 100. This is because unexpected uses that are likely to occur may differ depending on the work contents or the use environments. The work contents may include excavation work, leveling work, rolling work, and loading work. The use environments may include a flat construction site, a mountainous construction site, an industrial waste disposal facility, and a river construction site. The current work content or the current use environment of the shovel 100 may be automatically determined based on the output from the state detecting device 42 or the surrounding environment information obtaining device 44, or may be selected by the user on the detection target setting screen. In this case, the detection target setting screen may display a list of work contents or a list of use environments, and the user may select a work content or a use environment from the list. Then, the controller 30 may set unexpected uses included in a combination pattern associated with the work content or the use environment selected by the user from among the plurality of unexpected uses that can be detected. Accordingly, the user does not need to determine whether each of the unexpected uses, which can be detected, is required to be detected. Therefore, usability can be improved.

Further, the user may check (view) settings of the unexpected uses to be detected through the display device 50. Specifically, in response to an input by the user through the input device 54, the controller 30 may display a screen (hereinafter referred to as a "detection target checking screen") for displaying the current settings of the unexpected uses to be detected.

Referring back to FIG. 1 and FIG. 2, if the unexpected use determining unit 302 detects any unexpected use of the shovel 100, the unexpected use warning unit 303 uses a visual method or an audible method to notify an operator of the shovel 100 and a supervisor and workers around the shovel 100 about the unexpected use. In this manner, the unexpected use warning unit 303 can alert the operator of the shovel 100 and the workers and the supervisor at the work site of the shovel 10 about the unexpected use. For example, the unexpected use warning unit 303 may warn the operator of the shovel 100 about the unexpected use by controlling the display device 50 to cause the display device 50 to display a predetermined warning image. Further, the unexpected use warning unit 303 may warn the supervisor and the workers around the shovel 100 about the unexpected use by controlling the sound output device 52 to cause the sound output device 52 to output a predetermined warning sound.

All of the unexpected uses to be detected by the unexpected use determining unit 302 may be notified by the unexpected use warning unit 303, or some of the unexpected uses to be detected by the unexpected use determining unit 302 may be notified by the unexpected use warning unit 303. In the latter case, unexpected uses to be notified may be selected and checked by a user such as the operator of the shovel 100 in a similar manner to when unexpected uses to be detected are selected.

Further, the unexpected use warning unit 303 may notify (warn) either the operator of the shovel 100 or the workers in the vicinity of the shovel 100 that the unexpected use is detected.

Further, if the unexpected use determining unit 302 detects any unexpected use of the shovel 100, the controller 30 may restrict the movement of the shovel 100 instead of or in addition to notifying (warning) the operator of the shovel 100 and the workers around the shovel 100. Accordingly, the unexpected use of the shovel 100 can be restricted, and also the operator of the shovel 100 and the workers around the shovel 100 can be alerted of the unexpected use.

All of the unexpected uses to be detected by the unexpected use determining unit 302 may be subjected to restriction of movement of the shovel 100, or some of the unexpected uses to be detected by the unexpected use determining unit 302 may be subjected to restriction of movement of the shovel 100. In the latter case, unexpected uses subjected to restriction of movement of the shovel 100 may be selected and checked by a user such as the operator of the shovel 100 in a similar manner to when unexpected uses to be detected are selected and checked.

The information obtaining unit 304 obtains predetermined types of information (hereinafter referred to as "record target information"), and the log recording unit 305 records the information as unexpected use log information in the storage unit 307 .

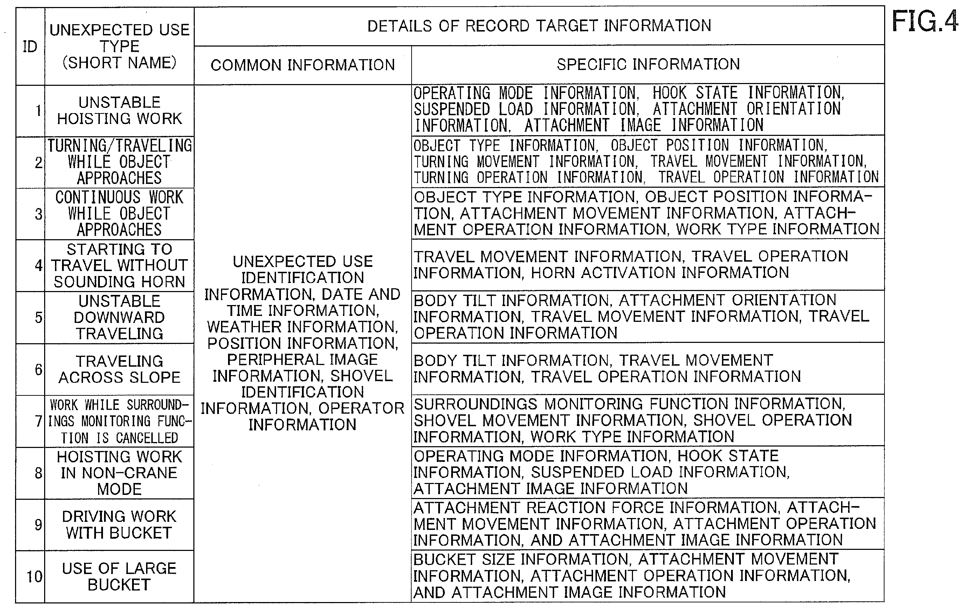

For example, FIG. 4 is a diagram illustrating a specific example of unexpected use log information, and specifically is a diagram illustrating an example of record target information for each unexpected use type of the shovel 100.

As illustrated in FIG. 4, record target information, included in the unexpected use log information, includes information common to each unexpected use type of the shovel 100 (hereinafter referred to as "common information") and information specific to each of the unexpected use types of the shovel 100 (hereinafter referred to as "specific information").

The common information may include information related to the unexpected use types of the shovel 100, such as an identifier (ID) for identifying each of the unexpected use types (hereinafter referred to as "unexpected use identification information").

Further, the common information may include information related to a date and time when an unexpected use of the shovel 100 is detected (hereinafter referred to as "date and time information"). The date and time information may include a date, day of the week, and time.

Further, the common information may include information related to weather when an unexpected use of the shovel 100 is detected (hereinafter referred to as "weather information"). The weather information may include predetermined weather conditions such as sunny, cloudy, rainy, and snowy conditions.

Further, the common information may include information related to the position of the shovel 100 when an unexpected use of the shovel 100 is detected (hereinafter referred to as "position information"). The position information may include longitude, latitude, and altitude information. Further, the position information may include geocode information such as GeoHash. Further, the position information may include information for identifying a work site.

Further, the common information may include an image captured by the image capturing device 40 and representing a situation surrounding the shovel 100 when an unexpected use of the shovel 100 is detected (hereinafter referred to as "peripheral image information").

Further, the common information may include identification information for identifying the shovel 100 (an example of second identification information, and hereinafter referred to as "shovel identification information"). For example, the shovel identification information may include a predefined machine number, a shovel identifier (ID), and the like. The information obtaining unit 304 can obtain the shovel identification information by reading out the machine number or the like pre-registered (stored) in the storage unit 307.

Further, the common information may include information related to an operator operating the shovel 100 (hereinafter referred to as "operator information"). The operator information may include identification information for identifying the operator operating the shovel 100 (an example of first identification information, and hereinafter referred to as "operator identification information"), and information related to various states of the operator (hereinafter referred to as "operator state information"). The operator state information may be biometric information related to the operator (hereinafter referred to as "operator biometric information"). Further, the operator identification information may be a predetermined operator ID. Further, the operator biometric information may include information related to an electroencephalogram and an electrocardiogram of the operator operating the shovel 100.

The information obtaining unit 304 obtains the common information based on various types of information output from the image capturing device 40, the state detecting device 42, and the surrounding environment information obtaining device 44.

The specific information includes information related to various states (such as an orientation state and a movement state) of the shovel 100 representing (identifying) an unexpected use of the shovel 100 (hereinafter referred to as "unexpected use identifying information"). In other words, the unexpected use identifying information is information related to various states of the shovel 100 and is used by the unexpected use determining unit 302 to determine the unexpected use of the shovel 100.

Specific information associated with "unstable hoisting work" may include information related to the operating mode of the shovel 100 when the "unstable hoisting work" of the shovel 100 is detected (hereinafter referred to as "operating mode information"). Further, the specific information associated with the "unstable hoisting work" may include information related to the state of the hook 80 when the "unstable hoisting work" of the shovel 100 is detected (hereinafter referred to as "hook state information"). The hook state information may include information as to whether the hook 80 is taken out of the storage part. Further, the specific information associated with the "unstable hoisting work" may include information related to a suspended load when the "unstable hoisting work" of the shovel 100 is detected (hereinafter referred to as "suspended load information"). The suspended load information may include information as to whether there is a suspended load and the weight of the suspended load. Further, the specific information associated with the "unstable hoisting work" may include information related to the orientation state of the attachment when the "unstable hoisting work" of the shovel 100 is detected (hereinafter referred to as "attachment orientation information"). The attachment orientation information may include information related to the orientation angle of the attachment (such as the boom angle, the arm angle, and the bucket angle), and information related to the position of the bucket 6 when viewed from the upper turning body 3. Further, the specific information associated with the "unstable hoisting work" may include information related to image information representing the state of the attachment when the "unstable hoisting work" of the shovel 100 is detected (hereinafter referred to as "attachment image information").

Note that because the attachment image information is generated from peripheral image information included in the common information, the attachment image information may be omitted if peripheral image information is included in the common information.

Specific information associated with "turning/traveling while an object approaches" may include information related to the type of a monitoring target when the "turning/traveling while an object approaches" of the shovel 100 is detected (hereinafter referred to as "object type information"). Further, the specific information associated with the "turning/traveling while an object approaches" may include information related to the position of the monitoring target when the "turning/traveling while an object approaches" of the shovel 100 is detected (hereinafter referred to as "object position information"). Further, the specific information associated with the "turning/traveling while an object approaches" may include information related to the movement of the upper turning body 3 when the "turning/traveling while an object approaches" of the shovel 100 is detected (hereinafter referred to as "turning movement information"). Further, the specific information associated with the "turning/traveling while an object approaches" may include information related to the movement of the lower traveling body 1 when the "turning/traveling while an object approaches" of the shovel 100 is detected (hereinafter referred to as "travel movement information"). The travel movement information may include information related to the travel direction of the lower traveling body 1 with reference to the orientation of the upper turning body 3. Further, the specific information associated with the "turning/traveling while an object approaches" may include information related to the operation state of the upper turning body 3 through the operation device 26 when the "turning/traveling while an object approaches" of the shovel 100 is detected (hereinafter referred to as "turning operation information"). Further, the specific information associated with the "turning/traveling while an object approaches" may include information related to the operation state of the lower traveling body 1 through the operation device 26 when the "turning/traveling while an object approaches" of the shovel 100 is detected (hereinafter referred to as "travel operation information").

Specific information associated with "continuous work while an object approaches" may include object position information and object type information when the "continuous work while an object approaches" of the shovel 100 is detected. Further, the specific information associated with the "continuous work while an object approaches" may include information related to a movement state of the attachment when the "continuous work while an object approaches" of the shovel 100 is detected (hereinafter referred to as "attachment movement information"). Further, the specific information associated with the "continuous work while an object approaches" may include information related to the operation state of the attachment when the "continuous work while an object approaches" of the shovel 100 is detected (hereinafter referred to as "attachment operation information"). Further, the specific information associated with the "continuous work while an object approaches" may include information related to the type of work of the shovel 100 when the "continuous work while an object approaches" of the shovel 100 is detected (hereinafter referred to as "work type information").

Specific information associated with "starting to travel without sounding a horn" may include travel movement information and travel operation information when the "starting to travel without sounding a horn" of the shovel 100 is detected. Further, the specific information associated with the "starting to travel without sounding a horn" may include information related to the activation state of the horn 56 when "starting to travel without sounding a horn" of the shovel 100 is detected (hereinafter referred to as "horn activation information"). The horn activation information may include information as to whether the horn 56 is activated (sounds) and the timing of the activation (sounding) of the horn 56 (for example, information indicating that the timing of the sounding the horn 56 was too early or information indicating that the horn 56 sounded after the lower traveling body 1 started to travel).

Specific information associated with "unstable downward traveling" may include information related to a tilt state of the body of the shovel 100 when the "unstable downward traveling" of the shovel 100 is detected (hereinafter referred to as "body tilt information"). For example, the specific information associated with the "unstable downward traveling" may include attachment orientation information, travel movement information, and travel operation information when the "unstable downward traveling" of the shovel 100 is detected.

Specific information associated with "traveling across a slope" may include body tilt information of the shovel 100, travel movement information, and travel operation information when "traveling across a slope" of the shovel 100 is detected.

Specific information associated with "work while the surroundings monitoring function is cancelled" may include information related to the surroundings monitoring function when the "work while the surroundings monitoring function is cancelled" of the shovel 100 is detected (hereinafter referred to as "surroundings monitoring function information"). The surroundings monitoring function information includes information related to on/off of the surroundings monitoring function. Further, the specific information associated with the "work while the surroundings monitoring function is cancelled" may include information related to the movement state of the shovel 100 (such as the movement states of the lower traveling body 1, the upper turning body 3, and the attachment) when the "work while the surroundings monitoring function is cancelled" of the shovel 100 is detected (hereinafter referred to as "shovel movement information"). Further, the specific information associated with the "work while the surroundings monitoring function is cancelled" may include information related to an operation state of the shovel 100 (such as operation states of the lower traveling body 1, the upper turning body 3, and the attachment) when the "work while the surroundings monitoring function is cancelled" of the shovel 100 is detected (hereinafter referred to as "shovel operation information"). Further, the specific information associated with the "work while the surroundings monitoring function is cancelled" may include work type information of the shovel 100 when the "work while the surroundings monitoring function is cancelled" of the shovel 100 is detected.

Specific information associated with "hoisting work in non-crane mode" may include operating mode information, hook state information, suspended load information, and attachment image information when "hoisting work in non-crane mode" of the shovel 100 is detected.

Specific information associated with "driving work with the bucket" may include information related to the reaction force acting on the distal end of the attachment (bucket 6) when "driving work with the bucket" of the shovel 100 is detected (hereinafter referred to as "attachment reaction force information"). Further, the specific information associated with the "driving work with the bucket" may include attachment movement information, attachment operation information, and attachment image information when the "driving work with the bucket" of the shovel 100 is detected.

Specific information associated with "use of a large bucket" may include information related to the size of the bucket 6 when the "use of a large bucket" of the shovel 100 is detected (hereinafter referred to as "bucket size information"). Further, the specific information associated with the "use of a large bucket" may include attachment movement information, attachment operation information, and attachment image information when the "use of a large bucket" of the shovel 100 is detected.

Similarly, specific information associated with "traveling on a cliff", "high slip frequency", "use in adverse weather conditions", and "high vibration frequency" may be defined.

The information obtaining unit 304 obtains specific information based on various types of information output in the course of processing performed by the unexpected use determining unit 302 .

Referring back to FIG. 1 and FIG. 2, if the unexpected use determining unit 302 determines that an unexpected use of the shovel 100 is performed, the information obtaining unit 304 obtains record target information including common information and specific information, and the log recording unit 305 records the record target information in the storage unit 307 as unexpected use log information 307A. Accordingly, unexpected use log information obtained each time any unexpected use of the shovel 100 is detected is accumulated in the management apparatus 200 as will be described below. As a result, the user of the support apparatus 300 can analyze detection results of unexpected uses of the shovel 100, and identify improvements in safety at a work site before an actual problem occurs.

The log transmitting unit 306 transmits (uploads) the unexpected use log information 307A recorded in the storage unit 307 to the management apparatus 200 through the communication device 60. After transmitting the unexpected use log information 307A to the management apparatus 200, the log transmitting unit 306 deletes the unexpected use log information 307A from the storage unit 307. After transmitting the unexpected use log information 307A to the management apparatus 200, the log transmitting unit 306 may retain the unexpected use log information 307A for a predetermined period of time and delete the unexpected use log information 307A thereafter.

For example, the log transmitting unit 306 transmits the unexpected use log information 307A recorded in the storage unit 307 to the management apparatus 200 at a predetermined timing after the previous transmission. The predetermined timing includes a timing of starting the shovel 100 and a timing of stopping the shovel 100.

Further, for example, the log transmitting unit 306 transmits the unexpected use log information 307A to the management apparatus 200 when the occupancy rate of the storage area prepared for the unexpected use log information 307A exceeds a predetermined reference value. In this manner, the log transmitting unit 306 may delete the unexpected use log information 307A after uploading the unexpected use log information 307A to the management apparatus 200, such that the storage area can be secured for subsequent unexpected uses of the shovel 100.

The log transmitting unit 306 may transmit log information of all unexpected uses detected by the unexpected use determining unit 302, or may transmit log information of some unexpected uses detected by the unexpected use determining unit 302. In the latter case, unexpected uses included in the transmitted log information can be selected and checked by a user such as the operator of the shovel 100 in a similar manner to when unexpected uses to be detected are selected and checked.

### <Configuration of Management Apparatus>

The management apparatus 200 includes the controller 210 and a communication device 220.

The controller 210 controls various operations in the management apparatus 200. The controller 210 includes a log obtaining unit 2101, a log-related information generating unit 2102, and a log-related information delivering unit 2103, as functional units implemented by executing one or more programs stored in a non-volatile secondary storage device on the CPU. Further, the controller 210 includes a storage unit 2100 as a storage area defined in a non-volatile internal memory such as a secondary storage device.

Note that the storage area corresponding to the storage unit 2100 may be provided in an external storage device that is communicatively connected to the controller 210.

The communication device 220 is any device that communicates with an external device, such as the shovel 100 and the support apparatus 300, through the communication network NW.

The log obtaining unit 2101 obtains unexpected use log information, transmitted from the shovel 100, through a receiving buffer of the communication device 220, and records the unexpected use log information in the storage unit 2100. Specifically, the log obtaining unit 2101 accumulates, in the storage unit 2100, history of unexpected use log information uploaded from the shovel 100. Accordingly, the management apparatus 200 can provide unexpected use log-related information generated based on the history of unexpected use log information (hereinafter referred to as "unexpected use log history information") to the user of the support apparatus 300, as will be described later. At this time, the log obtaining unit 2101 constructs a log information database (DB) 2100A (an example of a database) in the storage unit 2100 in which unexpected use log information obtained each time an unexpected use of the shovel 100 is detected is arranged such that given unexpected use log information that matches conditions relating to log contents is extracted from among the unexpected use log information. Accordingly, the controller 210 (the log-related information generating unit 2102, which will be described later) can readily and quickly extract appropriate unexpected use log information and generate unexpected use log-related information in response to the user's request.

In response to receiving a signal requesting unexpected use log-related information (hereinafter referred to as a "log-related information request") from the support apparatus 300 through the communication device 220, the log-related information generating unit 2102 generates unexpected use log-related information.

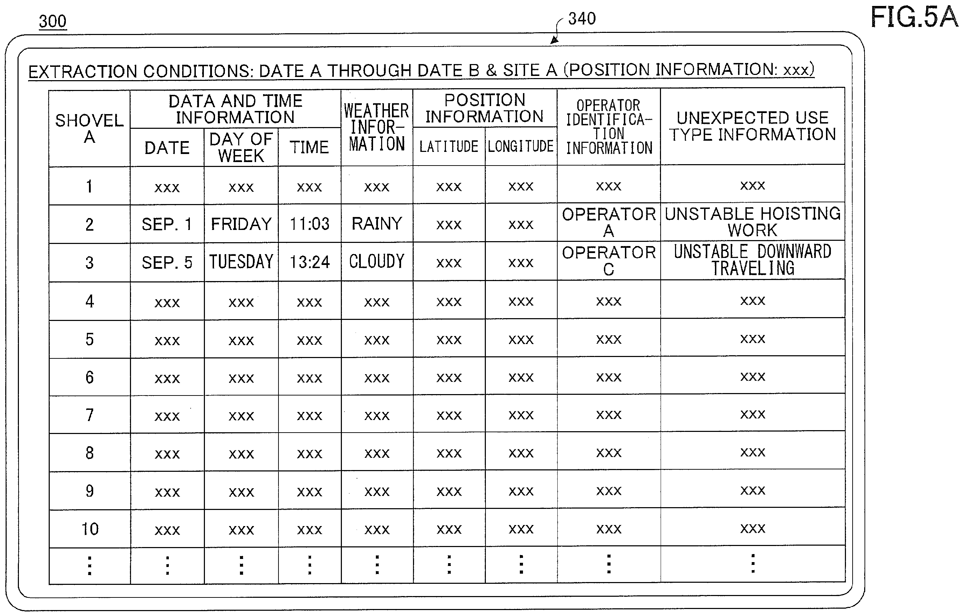

For example, the log-related information generating unit 2102 extracts unexpected use log history information that matches conditions relating to log contents from among the unexpected use log history information, and generates information (hereinafter referred to as "unexpected use log history extraction information") in a table format as unexpected use log-related information. Details of the unexpected use log history extraction information will be described later (see FIG. 5A).

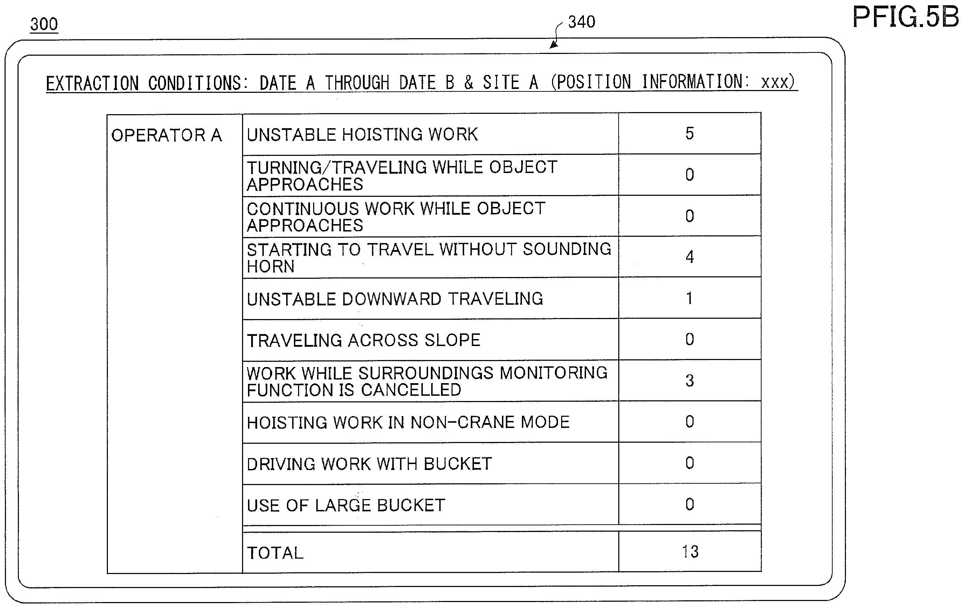

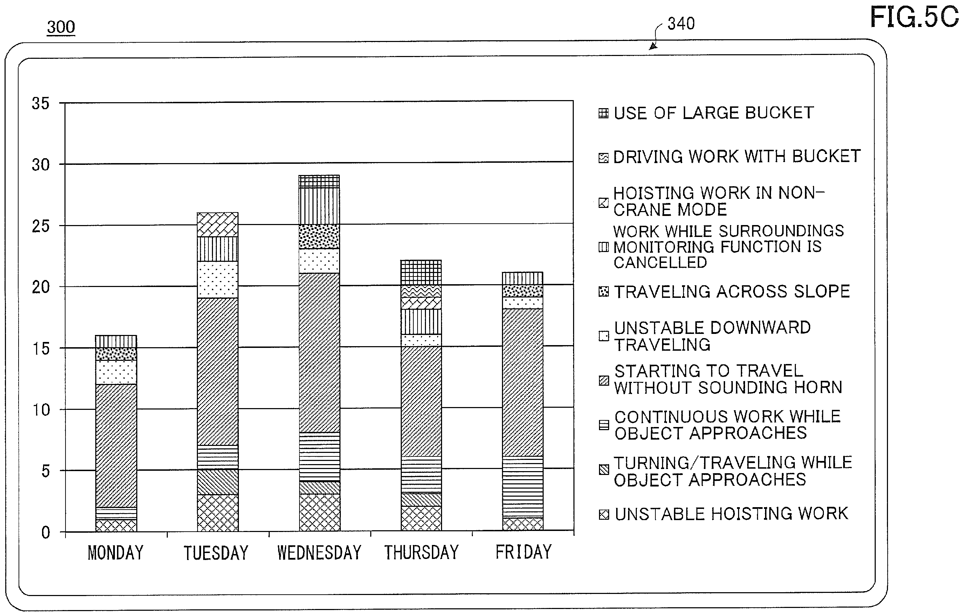

For example, the log-related information generating unit 2102 generates, as unexpected use log-related information, statistical information (hereinafter referred to as "unexpected use log statistical information") related to unexpected uses of the shovel 100 based on the unexpected use log history information. Details of the unexpected use log statistical information will be described later (see FIG. 5B and FIG. 5C).

The functions of the log-related information generating unit 2102 may be included in the log information DB 2100A. That is, the log information DB 2100A may be a database in which unexpected use log information is arranged such that unexpected use log information can be extracted based on a predetermined condition while unexpected use log statistical information can also be generated based on a predetermined condition.

The log-related information delivering unit 2103 delivers (transmits) the unexpected use log-related information, generated by the log-related information generating unit 2102, through the communication device 220 to the support apparatus 300, which is the transmission source of the log-related information request. Accordingly, the display device 340 of the support apparatus 300 displays the delivered unexpected use log-related information, as will be described later (see FIG. 5A and FIG. 5B). That is, the log-related information delivering unit 2103 delivers the unexpected use log-related information, generated by the log-related information generating unit 2102, to the support apparatus 300, so as to cause the display device 340 of the support apparatus 300 to display the unexpected use log-related information in accordance with a display specification defined in the unexpected use log-related information.

Note that the log-related information generating unit 2102 may generate unexpected use log-related information without defining a display specification. In this case, the controller 310 of the support apparatus 300 (for example, a log-related information display processing unit 3102, which will be described later) defines a display specification of the unexpected use log-related information.

### <Configuration of Support Apparatus>

The support apparatus 300 includes the controller 310, a communication device 320, an operation device 330, and the display device 340.

The controller 310 controls various operations of the support apparatus 300. The controller 310 includes a log-related information obtaining unit 3101 and the log related information display processing unit 3102, as functional units implemented by executing one or more programs stored in a secondary storage device. The functions of the log-related information obtaining unit 3101 and the log-related information display processing unit 3102 may be enabled by starting a predetermined application program (hereinafter referred to as "unexpected use log viewing application"), installed in the controller 310, in response to a predetermined operation performed by a user on the operation device 330 (such as a touch panel installed in the display device 340).

The communication device 320 is a device that communicates with a device outside the support apparatus 300, such as the management apparatus 200, through the communication network NW. The communications device 320 is, for example, a mobile communication module that conforms to a mobile communication standard, such as LTE, 4G, and 5G.

The operation device 330 receives various operations performed by the user on the support apparatus 300. The operation device 330 includes buttons, a keyboard, a mouse, a touchpad, and an operation unit implemented by hardware, such as a touch panel installed in the display device 340. The operation device 330 may include a combination of an operation unit implemented by hardware, such as a touch panel installed in the display device 340, and an operation unit implemented by software, such as a button icon on an operation screen displayed on the display device 340.

The display device 340 (an example of a display unit) displays various types of information images. The display device 340 may be a liquid crystal display or an organic electroluminescent (EL) display.

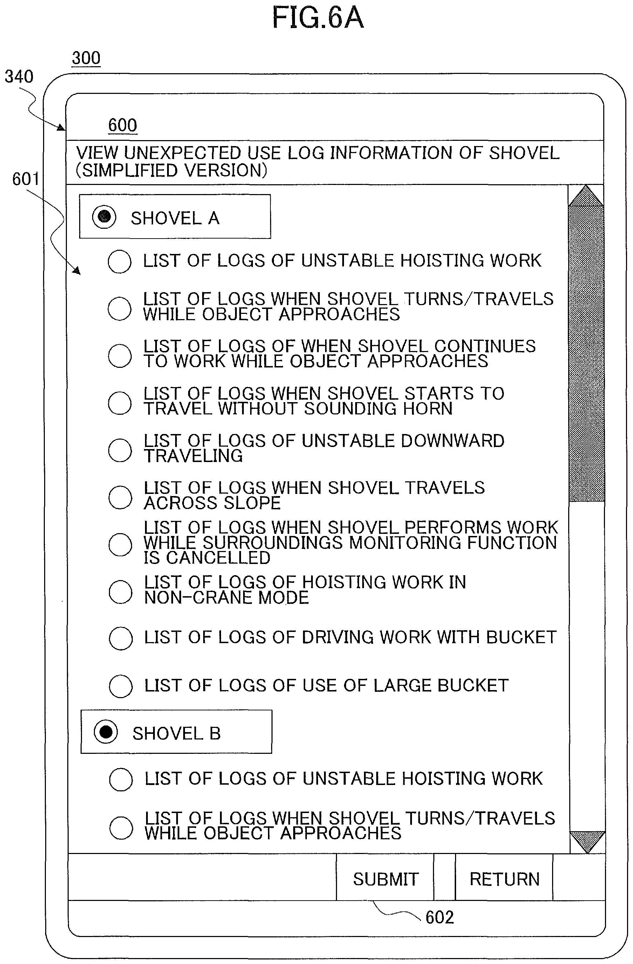

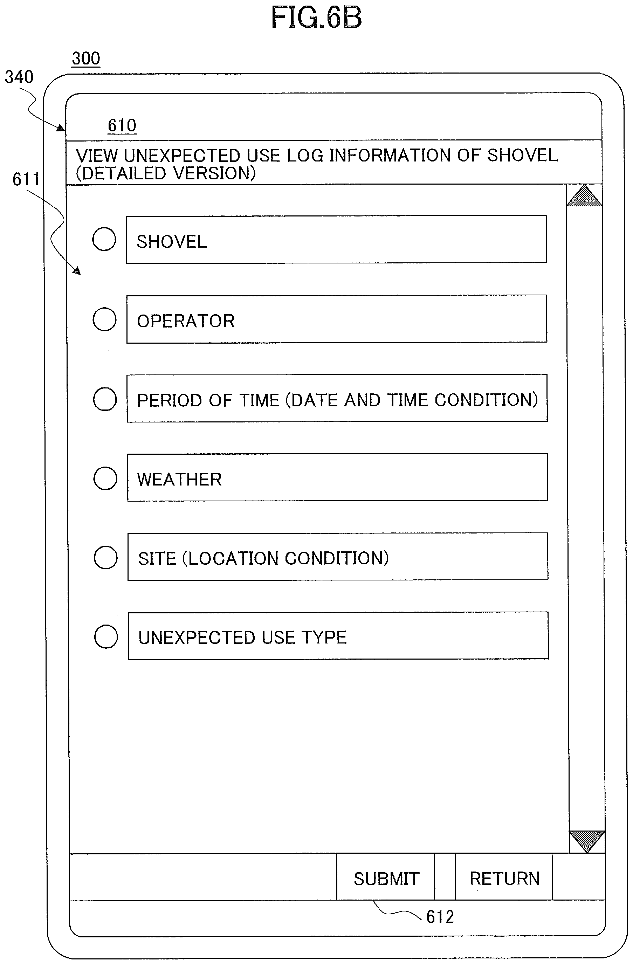

The log-related information obtaining unit 3101 transmits a log-related information request to obtain unexpected use log-related information to the management apparatus 200 through the communication device 320 in response to an operation on the operation device 330. The log-related information request includes information related to a specification (hereinafter referred to as "specification information") of the unexpected use log-related information, which is requested to be obtained. For example, if unexpected use log extraction information is requested, the specification information includes information related to conditions for extracting the unexpected use log extraction information from the log information DB 2100A. Further, if unexpected use log statistical information is requested, the specification information includes various conditions for generating (calculating) specific statistical information. For example, the log-related information obtaining unit 3101 determines the specification information in accordance with details of an operation performed by the operator through an operation screen for obtaining the unexpected use log-related information (hereinafter referred to as an "operation screen for obtaining log-related information"). Details of the operation screen for obtaining log-related information will be described later (FIG. 6A and FIG. 6B).

The log-related information display processing unit 3102 causes the display device 340 to display the unexpected use log-related information received from the management apparatus 200 through the communication device 320.

### [Specific Example of Unexpected Use Log-Related Information]

Next, a specific example of unexpected use log-related information generated by the management apparatus 200 (log-related information generating unit 2102) and displayed on the display device 340 of the support apparatus 300 will be described with reference to FIG. 5A through FIG. 5C.

### <Specific Example of Unexpected use Log History Extraction Information>

FIG. 5A is a diagram illustrating a first example of unexpected use log-related information displayed on the display device 340 of the support apparatus 300. Specifically, FIG. 5A is a diagram illustrating an example of unexpected use log history extraction information.

As illustrated in the example of FIG. 5A, (a list of) unexpected use log history extraction information is displayed on the display device 340 of the support apparatus 300. The unexpected use log history extraction information is obtained by extracting unexpected use log information whose date and time information matches "date A through date B", whose position information matches "site X", and whose shovel identification information matches "shovel A", from among unexpected use log history information stored in the log information DB 2100A of the management apparatus 200. Accordingly, the user of the support apparatus 300 can selectively check the unexpected use log information in a specific period of time. Further, the user of the support apparatus 300 can selectively check the unexpected use log information at the specific site X. Further, the user of the support apparatus 300 can selectively check the unexpected use log information related to the specific "shovel A". In addition, the user of the support apparatus 300 can analyze the tendency and the like of the unexpected use log information related to the specific shovel A at the specific site X in the specific period of time.

In this example, the user of the support apparatus 300 sets conditions such that the date and time information is limited to the "date A through date B", the position information is limited to the "site X", and shovel identification information is limited to the "shovel A", on the operation screen for obtaining log-related information displayed on the display device 340, through the operation device 330. Then, the support apparatus 300 (log-related information obtaining unit 3101) transmits a log-related information request including specification information corresponding to the set conditions to the management apparatus 200, and the management apparatus 200 (log-related information generating unit 2102) generates (a list of) unexpected use log extraction information according to this example. The management apparatus 200 (log-related information delivering unit 2103) delivers the list according to this example to the support apparatus 300, and the support apparatus 300 (log-related information display processing unit 3102) displays the delivered list on the display device 340.

Further, the unexpected use log history extraction information may be generated based on conditions on some of the date and time information, the position information, and the shovel identification information. Further, the unexpected use log history extraction information may be generated based on conditions on any other type of information (such as conditions in which operator identification information matches "operator A" and weather information matches "cloudy"), instead of or in addition to all or some of the date and time information, the position information, and the shovel identification information.

Further, in this example, the unexpected use log history extraction information includes some types of information of all types of information recorded as unexpected use log information. Specifically, the unexpected use log history extraction information includes, of common information and specific information, the common information only. In this manner, the user of the support apparatus 300 can display types of information that the user wishes to check on the display device 340 by performing a predetermined operation on the operation device 330. Therefore, usability can be improved. In this case, the unexpected use log history extraction information may include all the types of information, and the support apparatus 300 (log-related information display processing unit 3102) may cause the display device 340 to display a list of the unexpected use log history extraction information from which some types of information are omitted. Further, in response to the user's operation on the operation screen for obtaining log-related information, the support apparatus 300 (log-related information obtaining unit 3101) may transmit a log-related information request, including specification information for selecting some types of information of all the types of information, to the management apparatus 20.

### <Specific Example of Unexpected Use Log Statistical Information>

Next, FIG. 5B is a diagram illustrating a second example of unexpected use log-related information displayed on the display device 340 of the support apparatus 300. Specifically, FIG. 5B is a diagram illustrating an example of unexpected use log statistical information.

As illustrated in FIG. 5B, in this example, the unexpected use log statistical information is obtained by extracting unexpected use log information from among unexpected use log history information stored in the log information DB 2100A of the management apparatus 200 based on extraction conditions on the date and time information (date A through date B) and the position information. Further, as is apparent, the extraction conditions may include a condition on any type of information other than the date and time information and the position information. The same applies to unexpected use log statistical information of FIG. 5C, which will be described later.

Specifically, the unexpected use log statistical information displayed on the display device 340 of the support apparatus 300 represents the frequency (number of times) of detection of each unexpected use type of the shovel 100 on a per preregistered operator basis (for example, for each of "operator A", "operator B", and "operator C"). Specifically, the display device 340 displays, in a table format, the frequency of detection of each unexpected use type of the shovel 100 operated by the specific "operator A". Similarly, in response to the user's predetermined operation (such as a scroll operation or a flick operation) on the operation device 330, the display device 340 may display the frequency of detection of each unexpected use type of the shovel 100 operated by any other operator. Accordingly, the user of the support apparatus 300 can analyze what unexpected uses are likely to occur for each operator. Further, the user of the support apparatus 300 can provide safety instructions to each of the operators based on the analysis results.

In this example, the user of the support apparatus 300, for example, sets conditions on the date and time information and the position information, and selects an unexpected use log statistical information type on the operation screen for obtaining log-related information displayed on the display device 340 through the operation device 330. As a result, the support apparatus 300 (log-related information obtaining unit 3101) transmits a log-related information request, including specification information corresponding to the set conditions, to the management apparatus 200, and the management apparatus 200 (log-related information generating unit 2102) generates unexpected use log statistical information based on the specification information. Then, the management apparatus 200 (log-related information delivering unit 2103) delivers the unexpected use log statistical information to the support apparatus 300, and the support apparatus 300 (log-related information display processing unit 3102) displays the delivered unexpected use log statistical information on the display device 340. The same applies to the unexpected use log statistical information of FIG. 5C, which will be described later.

Similarly, the unexpected use log statistical information displayed on the display device 340 of the support apparatus 300 may represent the frequency (number of times) of detection of each unexpected use type on a per shovel basis (such as for each of "shovel A", "shovel B", and "shovel C"). Further, the unexpected use log statistical information displayed on the display device 340 of the support apparatus 300 may represent the frequency (number of times) of detection of each unexpected use type of the shovel 100 on a per date and time category basis (such as for each of a time range and a day of the week). Further, the unexpected use log statistical information displayed on the display device 340 of the support apparatus 300 may represent the frequency (number of times) of detection of each unexpected use type of the shovel 100 on a per weather basis (such as for each of sunny, cloudy, rainy, and snowy weather). Further, the unexpected use log statistical information displayed on the display device 340 of the support apparatus 300 may represent the frequency (number of times) of detection of each unexpected use type of the shovel 100 on a per work site basis.

Next, FIG. 5C is a diagram illustrating a third example of unexpected use log-related information displayed on the display device 340 of the support apparatus 300. Specifically, FIG. 5C is a diagram illustrating another example of unexpected use log statistical information.

As illustrated in FIG. 5C, in this example, the unexpected use log statistical information displayed on the display device 340 of the support apparatus 300 represents the frequency (number of times) of detection of each unexpected use type of the shovel 100 on a per day of the week basis (for each of Monday through Friday) in a bar graph. Specifically, the unexpected use log statistical information is a bar graph that represents a breakdown of the frequency of detection of each unexpected use type of the shovel 100 on a per day of the week basis.

As in this example, the unexpected use log statistical information may be represented in a graph format instead of a table format. As a result, the user of the support apparatus 300 can more easily grasp the unexpected use log statistical information in a visual manner.

### [Specific Example of Operation Screen for Obtaining Log-Related Information]

Next, referring to FIG. 6A and FIG. 6B, a specific example of an operation screen for obtaining log-related information displayed on the display device 340 of the support apparatus 300 will be described.

First, FIG. 6A is a diagram illustrating an example of the operation screen for obtaining log-related information ("operation screen for obtaining log-related information 600") displayed on the display device 340 of the support apparatus 300.

As illustrated in FIG. 6A, the operation screen for obtaining log-related information 1800 includes a selection field 601 for selecting a list of predetermined types (specifications) of unexpected use log history extraction information (see FIG. 5A), and includes a button icon 602 for transmitting a log-related information request that includes specification information corresponding to the types selected in the selection field 1801.

Specifically, the selection field 1801 displays a list of predetermined types of unexpected use log history extraction information that is extracted under different extraction conditions, for each of preregistered shovels (such as "shovel A" and "shovel B").

The user selects, through the operation device 330, desired types of unexpected use log history extraction information from the list displayed on the selection field 1801, and operates the button icon 1802. Accordingly, the user can cause the support apparatus 300 to transmit a log-related information request to obtain the desired types of the unexpected use log history extraction information to the management apparatus 200.

Further, the selection field 1801 may be replaced with a selection field for selecting predetermined types of unexpected use log statistical information. Accordingly, by performing a similar operation on the operation device 330, the user can cause the support apparatus 300 to transmit a log-related information request to obtain desired types of unexpected use log statistical information to the management apparatus 200.

Next, FIG. 6B is a diagram illustrating another example of the operation screen for obtaining log-related information ("operation screen for obtaining log-related information 610") displayed on the display device 340 of the support apparatus 300.

As illustrated in FIG. 6B, the operation screen for obtaining log-related information 610 includes a condition setting field 611 in which to set extraction conditions for extracting unexpected use log history extraction information, and includes a button icon 612 for transmitting a log-related information request including specification information corresponding to the extraction conditions set in the condition setting field 611.

The condition setting field 611 displays a list of types of information (common information) constituting unexpected use log information. The user selects, through the operation device 330, types of information for which extraction conditions are set, and inputs details of the extraction conditions in the condition setting field 611. At this time, the user can input the details of the extraction conditions for a plurality of types of information in the condition setting field 611. Accordingly, the user can cause the support apparatus 300 to transmit, to the management apparatus 200, a log-related information request to obtain unexpected use log history extraction information, which is extracted under the desired extraction conditions.

The condition setting field 611 may be replaced with a condition setting field in which conditions on specifications of a list of unexpected use log statistical information are sent. Accordingly, by performing a similar operation on the operation device 330, the user can cause the support apparatus 300 to transmit, to the management apparatus 200, a log-related information request to obtain unexpected use log statistical information corresponding to desired conditions.

### [Effects]

Next, effects of the shovel state log management system, and effects of the shovel 100, the management apparatus 200, and the support apparatus 300 included in the shovel state log management system according to the embodiment will be described.

The shovel 100 (controller 30) according to the embodiment obtains information related to a predetermined movement of the shovel 100, and detects the predetermined movement.

Examples of undesirable movements of the shovel 100 in terms of safety, durability, and the like include a case in which the shovel 100 approaches an object that is located close to the shovel 100 and case in which the shovel 100 generates vibrations at a high frequency. In particular, when the shovel 100 is remotely operated via an external apparatus, an operator of the external apparatus needs to ascertain the situation surrounding the shovel 100 through image information. Therefore, as compared to when the operator of the cabin 10 performs an operation on the operation device 26, it would be difficult for the operator of the external apparatus to select an appropriate operation for the situation surrounding the shovel 100. As a result, an undesirable movement of the shovel 100 would easily occur. In addition, in a case where the fully automatic operation function of the shovel 100 is enabled and the cabin 10 is unattended, an operator would not be able to correct an error caused by mis-determination of the shovel 100 if the shovel 100 fails to properly determine the surrounding situation. Therefore, it would be difficult for the shovel 100 to select an appropriate operation for the surrounding situation, and as a result, an undesirable movement of the shovel 100 would occur.

Conversely, in the present embodiment, undesirable movements corresponding to unexpected uses of the shovel 100 that may decrease safety are defined as predetermined movements. Accordingly, the shovel 100 can detect such an undesirable movement. In addition, the undesirable movements of the shovel 100 can be restricted by sharing analysis results of occurrences of the undesirable movements of the shovel 100 among an administrator, workers, an operator, and the like at a work site. Further, subsequent actions can be taken to prevent a decrease in safety of the work site due to the undesirable movements. Therefore, the safety of the work site and the durability of the shovel 100 can be improved.

Further, in the present embodiment, the shovel 100 may detect a predetermined movement and perform a predetermined function to issue an alert of the predetermined movement.

Accordingly, the shovel 100 can issue an alert in response to detecting a predetermined movement that may decrease safety. Specifically, the shovel 100 can improve the safety of a work site.

Further, in the present embodiment, the shovel 100 may perform at least one of notifying at least one of an operator of the shovel 100 and a worker around the shovel 100, restricting the operation of the shovel 100, recording log information (unexpected use log information) indicating that the predetermined movement is detected in the storage unit 307, and transmitting the log information to the management apparatus 200.

Accordingly, as a predetermined function to issue an alert, the shovel 100 can perform at least one of notifying an operator of the shovel 100 and a worker around the shovel 100, restricting the operation of the shovel 100, recording log information, and transmitting the log information to an external apparatus.

Further, in the present embodiment, the predetermined movement includes at least one of a first movement state in which the shovel 100 performs hoisting work while the stability of the body of the shovel 100 falls below a predetermined reference value, a second movement state in which the shovel 100 turns or travels so as to approach an predetermined object while the predetermined object is detected in an area relatively adjacent to and surrounding the shovel 100 by the surroundings monitoring function, a third movement state in which the shovel 100 continues to work while the predetermined object is detected in the area by the surroundings monitoring function, a fourth movement state in which the shovel 100 starts to travel without sounding the horn, a fifth movement state in which the shovel 100 travels down a slope while the orientation state of the shovel 100 is unstable with a bucket being raised to a relatively high position above the ground, a sixth movement state in which the shovel 100 travels across the slope, a seventh movement state in which the shovel 100 performs work while the surroundings monitoring function is forcibly cancelled, an eighth movement state in which the shovel 100 performs the hoisting work while the shovel 100 is not in crane mode, a ninth movement state in which the shovel 100 drives a target into the ground with the distal end of the attachment, and a tenth movement state in which the shovel 100 performs work with a bucket having a relatively large size that exceeds a predetermined reference value being attached to the distal end of the attachment.

Accordingly, the shovel 100 can detect the above-described specific movement states as predetermined movements.

Further, in the present embodiment, the shovel 100 may detect the predetermined movement by determining whether at least one of the predetermined movement and a predetermined operation corresponding to the predetermined movement is performed.

Accordingly, the shovel 100 can specifically detect the predetermined movement.

Further, in the present embodiment, the log information may include information related to a date and a time when the predetermined movement is detected.

Accordingly, the analyzer and the like can analyze the date and time each time the predetermined movement is detected.

Further, in the present embodiment, the log information may include at least one of first identification information for identifying an operator when the predetermined movement is detected and second identification information for identifying the shovel when the predetermined movement is detected.

Accordingly, the analyzer and the like can analyze which is the shovel 100 by which the predetermined movement is performed, and which of the operators is using the shovel 100 of the use state corresponding to the predetermined movement, based on the log information.

Further, in the present embodiment, the log information may include at least one of information related to a type of the predetermined movement, information related to a state of the shovel 100 representing the predetermined movement, information related to a position of the shovel 100 when the predetermined movement is detected, and information related to an environment surrounding the shovel 100 when the predetermined movement is detected.

Accordingly, based on the log information, the analyzer and the like can analyze the type of the predetermined movement, the location where the predetermined movement is detected, and the surrounding environment (such as weather) when the predetermined movement is detected. Further, the analyzer and the like can check whether the predetermined movement is actually performed based on the information related to the state of the shovel 100 representing the predetermined movement.

Further, in the present embodiment, the information related to the predetermined movement (which is used to detect the predetermined movement) may include at least one of information related to a movement state of the shovel 100 and information related to an operation state of the shovel 100.

Accordingly, the shovel 100 (controller 30) can ascertain the movement state and the operation state of the shovel 100, and can specifically detect the predetermined movement of the shovel 100.

Further, in the present embodiment, the controller 30 of the shovel 100 can set the predetermined movement to be detected from among a plurality of predetermined candidate movements based on a predetermined input received by the input device 54.

Accordingly, the shovel 100 (controller 30) allows the user to select the predetermined movement to be detected from among the plurality of predetermined candidate movements that can be detected by the controller 30.

Further, in the present embodiment, combination patterns of the plurality of predetermined candidate movements, including the predetermined movement to be detected, are registered in advance (prepared) for respective work environments, work contents, or equipment specifications of the shovel. Further, the controller sets the predetermined movement to be detected based on a combination pattern associated with a current work environment, a current work content, or a current equipment specification of the shovel.

In this manner, combination patterns of predetermined movements that are likely to occur can be prepared for respective work environments, work contents, or equipment specifications, thus allowing the shovel 100 (controller 30) to detect a predetermined movement based on each of the work environments, work contents, or equipment specifications.

Further, in the present embodiment, the management apparatus 200 includes the log obtaining unit 2101 configured to obtain, from the shovel 100, log information indicating that a predetermined movement of the shovel 100 is detected.

Accordingly, by defining movements, corresponding to unexpected uses of the shovel 100 that may decrease safety, as predetermined movements, the management apparatus 200 (an operator thereof) can detect such a movement and take a subsequent action to prevent a decrease in safety of a work site due to the movement. In this manner, the management apparatus 200 can improve the safety of the work site.

Further, in the present embodiment, the log obtaining unit 2101 may obtain, directly from the shovel 100, log information indicating that the predetermined movement is detected and record the log information in the storage unit 2100.

Accordingly, the management apparatus 200 can accumulate log information. The management apparatus 200 can create a report on the predetermined movement of the shovel 100 based on the accumulated log information, and can issue an alert for safety of a work site by distributing the report to a terminal used by a supervisor of the work site.

Further, in the present embodiment, the log obtaining unit 2101 constructs a database (log information DB 2100A) in the storage unit 2100 in which log information obtained each time the predetermined movement is detected is arranged such that given log information that matches a condition relating to a log content is extracted from among the log information.

Accordingly, the management apparatus 200 can readily extract log information that matches a predetermined search condition from log information history.

Further, in the present embodiment, the management apparatus 200 may include the log-related information delivering unit 2103 configured to generate log-related information based on the log information stored in the storage unit, and cause a display device of a user terminal to display the log-related information in a predetermined format. That is, the support apparatus 300 may cause the display device 340 to display log-related information in a predetermined format, which is generated based on log information obtained each time a predetermined movement is detected by the shovel 100.

Accordingly, the management apparatus 200 and the support apparatus 300 allow the user such as a supervisor at a work site to visually check the log-related information of the predetermined movement, thereby improving the safety of the work site.

Further, in the present embodiment, the log-related information delivering unit 2103 may cause the display device 340 to display a list of log information that matches conditions relating to one or more types of information of a plurality of types of information included in the log information stored in the storage unit 2100.

Accordingly, the management apparatus 200 can allow the user to visually check a history list of one or more predetermined movements detected in response to operations by a specific operator or a history list of one or more predetermined movements detected during a specific period of time.

Further, in the present embodiment, the log-related information delivering unit 2103 may generate statistical information related to the predetermined movement based on the log information stored in the storage unit 2100, and cause the display device 340 to display the statistical information.

Accordingly, the management apparatus 200 can allow the user to visually check the statistical information related to the predetermined movement and grasp various tendencies of the predetermined movement, thereby improving the safety of the work site.

### [Modifications/Variations]

Although the embodiments have been specifically described above, the present disclosure is not limited to the specific embodiments, and various modifications and variations may be made without departing from the scope of the present invention set forth in the claims.

For example, in the above-described embodiments, the functions of the log-related information generating unit 2102 may be transferred from the management apparatus 200 to the support apparatus 300. In this case, the latest log information DB 2100A is appropriately delivered from the management apparatus 200 to the support apparatus 300. That is, the support apparatus 300 obtains unexpected use log information, which corresponds to the log information DB 2100A, from the management apparatus 200, and records the unexpected use log information in the internal memory (such as the secondary storage device) of the controller 310.

In the above-described embodiments and modifications, both common information and specific information are recorded (accumulated) as unexpected use log information. However, only one of the common information and the specific information may be recorded (accumulated).

In the above-described embodiments and modifications, as a predetermined function to issue an alert of an unexpected use of the shovel 100, the shovel 100 (controller 30) can perform all of notifying an operator and a worker around the shovel 100, restricting the operation of the shovel, recording unexpected use log information, and transmitting the unexpected use log information to the management apparatus 200; however, the shovel 100 (controller 30) may perform at least one of the above. For example, each time the controller 30 detects an unexpected use of the shovel 100, the controller 30 may upload information (corresponding to unexpected use log information) obtained by the information obtaining unit 304 to the management apparatus 200, and does not necessarily record (store) the unexpected use log information. Further, each time the controller 30 detects an unexpected use of the shovel 100, the controller 30 may record unexpected use log information, and store the unexpected use log information in an internal memory or an external storage device communicatively connected to the controller 30, instead of transmitting the unexpected use log information to an external apparatus. In this case, data corresponding to the unexpected use log information may be appropriately loaded into an external recording medium by, for example, a service technician of the shovel 100. The service technician may visit a facility or the like where the management apparatus 200 is installed and transfer the data from the recording medium to the management apparatus 200.

In the above-described embodiments and modifications, an unexpected use of the shovel 100 is detected by the shovel 100. However, an unexpected use of the shovel 100 may be detected by the management apparatus 200. In this case, various types of information used to detect an unexpected use of the shovel 100 are transmitted (uploaded) from the shovel 100 to the management apparatus 200. For example, at least one of information related to a movement state and information related to an operation state of the shovel 100 is transmitted (uploaded) from the shovel 100 to the management apparatus 200. That is, the shovel 100 may transmit, to the management apparatus 200, at least one of information related to a movement state and information related to an operation state of the shovel 100, which are used to detect a predetermined movement (for example, an unexpected use) of the shovel 100. Further, the management apparatus 200 may detect a predetermined movement of the shovel 100 based on at least one of the information related to the movement state and the information related to the operation state of the shovel 100. At this time, the management apparatus 200 (log obtaining unit 2101) may detect an unexpected use of the shovel 100 by real-time processing based on information uploaded in real time, or may detect an unexpected use of the shovel 100 by subsequent batch processing. Then, the management apparatus 200 (log obtaining unit 2101) may obtain unexpected use log information in the same manner as that of the above-described information obtaining unit 304.

In the above-described embodiments and modifications, the shovel 100 transmits unexpected use log information to the management apparatus 200. However, the shovel 100 may transmit unexpected use log information to the support apparatus 300. In this case, similar to the above-described embodiments, the shovel 100 and the support apparatus 300 may be communicatively connected through the communication network NW, or may be communicatively connected through a predetermined near-field communication (such as Wi-Fi (registered trademark) or Bluetooth (registered trademark)). Further, the functions of the log obtaining unit 2101 and the log-related information generating unit 2102 may be transferred from the management apparatus 200 to the support apparatus 300, and the support apparatus 300 may generate unexpected use log-related information based on unexpected use log information obtained directly from the shovel 100, and cause the display device 340 to display the unexpected use log-related information.

In the above-described embodiments and modifications, the user can set an unexpected use (a predetermined movement) to be detected through the input device 54 of the shovel 100. However, the user may set an unexpected use to be detected through the support apparatus 300. In this case, a detection target setting screen, which is similar to that of the display device 50 of the shovel 100, may be displayed on the display device 340 of the support apparatus 300.

In the above-described embodiments and modifications, the user can check (view) details of a set unexpected use (predetermined movement) to be detected through the input device 54 of the shovel 100. However, the user may check (view) details of the set unexpected use (predetermined movement) to be detected through the support apparatus 300. In this case, a detection target checking screen, which is similar to that of the display device 50 of the shovel 100, may be displayed on the display device 340 of the support apparatus 300.

In the above-described embodiments and modifications, an unexpected use (a predetermined movement) of the shovel 100 is detected and recorded as log information. However, any undesirable movement (an action) at a construction site may be detected and recorded as log information. For example, an undesirable movement of a work machine such as a bulldozer or a crane used at the construction site may be detected and recorded as log information. Further, an undesirable movement of a worker who works at the construction site may be detected and recorded as log information on the assumption that an image capturing device, a sensor, and the like are installed at the construction site. Further, similar to FIG. 5A through FIG. 5C, the display device 340 of the support apparatus 300 may display log-related information generated from log information of undesirable movements of work machines and worders at the construction site. Accordingly, the owner of the construction site can consider measures to improve the safety of the construction site and the durability of the work machines used at the construction site.

In the above-described embodiments and modifications, the shovel 100 is configured to hydraulically drive all of various operational elements such as the lower traveling body 1, the upper turning body 3, the boom 4, the arm 5, and the bucket 6. However, the shovel 100 may be configured to electrically drive some of the operational elements. That is, the configuration and the like disclosed in the above-described embodiments may also be applied to hybrid shovels, electrically powered shovels, and the like.

This application is based on and claims priority to Japanese Patent Application No. 2018-210900, filed on November 8, 2018, the entire contents of which are incorporated herein by reference.

### DESCRIPTION OF THE REFERENCE NUMERALS

1 lower traveling body
1A, 1B traveling hydraulic motor
2 turning mechanism
2A turning hydraulic motor
3 upper turning body
4 boom
5 arm
6 bucket
7 boom cylinder
8 arm cylinder
9 bucket cylinder
15a operating pressure sensor
26 operation device
30 controller
40 image capturing device
40B, 40F, 40L, 40R camera
42 state detecting device
44 surrounding environment information obtaining device
50 display device
52 sound output device
54 input device
54a crane mode switch
54b horn switch
56 horn
60 communication device
100 shovel
200 management apparatus (external apparatus, information processing apparatus)
210 controller
220 communication device
300 support apparatus (user terminal apparatus, terminal apparatus)
301 surroundings monitoring control unit
302 unexpected use determining unit
303 unexpected use warning unit
304 information obtaining unit
305 log recording unit
306 log transmitting unit
307 storage unit
307A unexpected use log information
310 controller
320 communication device
330 operation device
340 display device (display unit)
2100 storage unit
2100A log information database (DB)
2101 log obtaining unit
2102 log-related information generating unit
2103 log-related information delivering unit
3101 log-related information obtaining unit
3102 log-related information display processing unit
SYS shovel state log management system

## Claims

1. A shovel,
wherein the shovel obtains information related to a predetermined movement of the shovel, and detects the predetermined movement or transmits the information related to the predetermined movement to an external apparatus.

2. The shovel according to claim 1,
wherein the shovel detects the predetermined movement of the shovel, and performs a predetermined function to issue an alert of the predetermined movement.

3. The shovel according to claim 1,
wherein the predetermined function includes at least one of notifying at least one of an operator of the shovel or a worker around the shovel, restricting an operation of the shovel, recording log information indicating that the predetermined movement is detected in a predetermined storage unit, and transmitting the log information to the external apparatus.

4. The shovel according to claim 1,
wherein the predetermined movement includes at least one of:
a first movement state in which the shovel performs hoisting work while stability of a body of the shovel falls below a predetermined reference value;
a second movement state in which the shovel turns or travels so as to approach a predetermined object while the predetermined object is detected in an area relatively adjacent to and surrounding the shovel by a surroundings monitoring function of the shovel;
a third movement state in which the shovel continues to work while the predetermined object is detected in the area by the surroundings monitoring function;
a fourth movement state in which the shovel starts to travel without sounding a horn, a fifth movement state in which the shovel travels down a slope while an orientation state of the shovel is unstable with a bucket being raised to a relatively high position above a ground;
a sixth movement state in which the shovel travels across the slope, a seventh movement state in which the shovel performs work while the surroundings monitoring function is forcibly cancelled;
an eighth movement state in which the shovel performs the hoisting work while the shovel is not in crane mode;
a ninth movement state in which the shovel drives a target into the ground with a distal end of an attachment;
a tenth movement state in which the shovel performs work with a bucket having relatively large size that exceeds a predetermined reference value being attached to the distal end of the attachment;
an eleventh movement state in which the shovel travels on a cliff relatively close to an edge of the cliff;
a twelfth movement state in which a lower traveling body of the shovel slips at a relatively high frequency;
a thirteenth movement state in which the shovel performs work in adverse weather conditions; and
a fourteenth movement state in which the shovel vibrates at a relatively high frequency.

5. The shovel according to claim 1,
wherein the shovel detects the predetermined movement by determining whether at least one of the predetermined movement and a predetermined operation corresponding to the predetermined movement is performed.

6. The shovel according to claim 3,
wherein the log information includes at least one of:
information related to a date and a time when the predetermined movement is detected;
first identification information for identifying the operator when the predetermined movement is detected;
second identification information for identifying the shovel when the predetermined movement is detected;
information related to a type of the predetermined movement;
information related to a state of the shovel representing the predetermined movement;
information related to a position of the shovel when the predetermined movement is detected; and
information related to an environment surrounding the shovel when the predetermined movement is detected.

7. The shovel according to claim 1,
wherein the information related to the predetermined movement includes at least one of information related to a movement state of the shovel and information related to an operation state of the shovel.

8. The shovel according to claim 1, comprising:
an input device configured to receive an input from a user; and
a controller configured to set the predetermined movement to be detected from among a plurality of predetermined candidate movements based on a predetermined input received by the input device.

9. The shovel according to claim 1, comprising a controller configured to set the predetermined movement to be detected from among a plurality of predetermined candidate movements,
wherein combination patterns of the plurality of predetermined candidate movements, including the predetermined movement to be detected, are registered in advance for respective work environments, work contents, or equipment specifications of the shovel, and
the controller sets the predetermined movement to be detected based on a combination pattern associated with a current work environment, a current work content, or a current equipment specification of the shovel.

10. An information processing apparatus,
wherein the information processing apparatus obtains information related to a predetermined movement of a shovel, the information related to the predetermined movement of the shovel being obtained by the shovel, and
detects the predetermined movement of the shovel or obtains log information indicating that the predetermined movement is detected by the shovel.

11. The information processing apparatus according to claim 10, wherein the information processing apparatus stores, in a predetermined storage unit, log information indicating that the predetermined movement of the shovel is detected or indicating that the predetermined movement is detected by the shovel.

12. The information processing apparatus according to claim 11, wherein the information processing apparatus constructs a database in the storage unit in which log information for each detection of the predetermined movement is arranged such that given log information that matches a condition relating to a log content is extracted from among the log information.

13. The information processing apparatus according to claim 12, wherein the information processing apparatus generates log-related information based on the log information stored in the storage unit, and causes a display device of a user terminal to display the log-related information in a predetermined format.

14. The information processing apparatus according to claim 13, wherein the information processing apparatus causes the display device to display a list of log information that matches conditions relating to one or more types of information of a plurality of types of information included in the log information stored in the storage unit, or the information processing apparatus generates statistical information related to the predetermined movement based on the log information stored in the storage unit, and causes the display device to display the statistical information.

15. An information processing method executed by an information processing apparatus, the method comprising:
obtaining information related to a predetermined movement of a shovel, the information related to the predetermined movement of the shovel being obtained by the shovel; and
detecting the predetermined movement of the shovel or obtaining log information indicating that the predetermined movement is detected by the shovel.

16. An information processing program for causing an information processing apparatus to execute a process comprising:
obtaining information related to a predetermined movement of a shovel, the information related to the predetermined movement of the shovel being obtained by the shovel; and
detecting the predetermined movement of the shovel or obtaining log information indicating that the predetermined movement is detected by the shovel.

17. A terminal apparatus comprising,
a display unit configured to display, in a predetermined format, information related to log information for each detection of a predetermined movement of a shovel.

18. A display method executed by a terminal apparatus, the method comprising,
displaying, on a display unit of the terminal apparatus, information related to log information for each detection of a predetermined movement of a shovel in a predetermined format.

19. A display program for causing a terminal apparatus to execute a process comprising:
displaying, on a display unit of the terminal apparatus, information related to log information for each detection of a predetermined movement of a shovel in a predetermined format.
